# EUROPEAN PATENT SPECIFICATION

(11) **EP 1 252 494 B1**
(45) Date of publication and mention of the grant of the patent: **29.04.2009**
(21) Application number: 99964237.4
(22) Date of filing: 14.12.1999
(51) Int. Cl.: G01N 1/31, G01N 33/48, G01N 1/30

(54) **METHOD AND APPARATUS FOR AUTOMATED REPROCESSING OF TISSUE SAMPLES**
VERFAHREN UND APPARAT ZUR AUTOMATISCHEN WIEDERHOLTEN VERARBEITUNG VON GEWEBEPROBEN
PROCEDE ET DISPOSITIF DE RETRAITEMENT AUTOMATIQUE D'ECHANTILLONS DE TISSUS

(30) Priority: 15.12.1998 US 212367
(43) Date of publication of application: 30.10.2002
(73) Proprietor: VENTANA MEDICAL SYSTEMS, INC., Tucson, AZ 85737 (US); Baunoch, David, Oro Valley, AZ 85737 (US); Jones, Richard, Tempe, AZ 85283 (US)
(72) Inventor: BAUNOCH, David, Oro Valley, AZ 85737 (US); JONES, Richard, Tempe, AZ 85283 (US)
(74) Representative: Müller-Boré & Partner Patentanwälte
(86) International application number: PCT/US1999/029515
(87) International publication number: WO 2000/036393

(56) References cited:
- EP-A- 0 508 568
- EP-A- 0 508 568
- US-A- 4 001 460
- US-A- 4 141 312
- US-A- 5 354 370
- US-A- 5 625 706
- US-A- 5 625 706

## Description

This invention relates generally to the fields of histology and cytology, and more particularly relates to a method for reprocessing and processing a specimen.

Microscopic examination of specimen samples typically involves examining a slice or a cross-section of the sample. In order to obtain a cross-section, the specimen sample undergoes a process to infiltrate the specimen with a paraffin wax or a wax substitute. Thereafter, the block is embedded and sliced into sections using a microtome.

The method of processing the specimen involves fixation of the specimen and preparation of the infiltrated specimen from the fixed specimen. Fixation of the specimen typically involves immersion, subjecting or exposure of the specimen in a fixing agent, such as formalin. Preparation of the infiltrated specimen from the fixed specimen is typically a time-consuming, multi-step process requiring dehydration of the fixed specimen with a dehydrant (such as alcohol), clearing of the dehydrant with a suitable clearant (a typical solvent is xylene), and infiltration of the specimen with an infiltrating medium, such as paraffin wax. In addition, the dehydration and clearing steps typically require immersion, subjecting or exposure of the specimen in a graded series of reagents for comparatively long periods of time. The time required for tissue preparation may be on the order of 8 to 12 hours. Examples of tissue preparation are in U.S. Patent No. 3,961,097 entitled "Method of Preparing Tissue for Microscopic Examination" and U.S. Patent No. 4,656,047 entitled "Rapid Method for Cell Block Preparation," .

Different types of specimens, such as any organelle, cell, cell suspension, tissue section, or tissue specimen, may be infiltrated with a paraffin medium for examination. However, different types of specimens may require different types of procedures to be processed properly. In addition, there may be instances where the specimen may be processed incorrectly, due to contamination of reagents during processing or inadequate fixation. It is typically not until after the specimen has been embedded and sliced that it can be determined whether the specimen has been properly processed. At that point, there are two options: obtain another specimen or reprocess the embedded specimen. If one chooses to reprocess the sample, this involves sequentially immersing, exposing or subjecting the specimen with a series of reagents under controlled conditions. However, this process is very time-consuming and requires a technician to manually proceed through each of the reprocessing steps.

Further, there are instances where a slice or a cross-section of a specimen, after being processed, will be reprocessed for analysis. One instance is ploidy analysis in which tissue sections are cut from the paraffin block, wrapped in a permeable material and reprocessed. The reprocessing steps remove the paraffin using a clearing agent, remove the clearing agent using a dehydrant and remove the dehydrant using an aqueous medium. Nuclei from the specimen are then prepared for DNA analysis using a fluorescent compound.

Document US 4,001,460 discloses a tissue processing method which utilizes a closed system for sequentially immersing light microscopy tissue specimens in treating fluids preparatory to embedding or in staining fluids. Treating or staining fluids, including paraffin, are drawn into the processing chamber by use of vacuum and are forced back to their respective containers by user of pressure and the specimens remain substantially stationary throughout the fluid treatment.

Document EP 0 508 568 A2 provides apparatus and methods for the sequential multi-step processing of slide surface portions. The subject-matter of the document includes apparatus subassemblies and assemblies and a computer driven control system therefor. The subject-matter of the document permits at least on step of such a process sequence to be carried out with minimal amounts of processing liquids which is advantageous for specimen treatment with costly reagents, such as aqueous compositions containing probes. Immunochemical and in situ hybridization procedures can be carried out.

In accordance with the invention, a method for automatically reprocessing a specimen using the steps of claim 1 is provided.

Accordingly, a goal is to process and reprocess specimens for microscopic examination. These and other objects, features, and advantages of the present invention are discussed or apparent in the following detailed description.

A presently preferred embodiment of the present invention is described herein with reference to the drawings wherein:
FIG. 1 is a front perspective view of the processing and reprocessing system;
FIG. 2a is block diagram of the Operating Module of the processing and reprocessing system;
FIG. 2b is block diagram of the Reagent Module of the processing and reprocessing system;
FIG. 3 is a block diagram of the pressure modifier, float valve and processing chamber in the Operating Module and Reagent Module of Figures 2a and 2b;
FIG. 4 is a front view of the Reagent Module of Figure 1 with the doors removed;
FIG. 5 is a flow chart of the processing of a specimen;
FIG. 6a is a flow chart of the reprocessing of a specimen until introduction of an aqueous fluid in the specimen and processing of the specimen; and
FIG. 6b is a flow chart of the reprocessing of a specimen, until the step as indicated by the operator, and processing of the specimen.

The processing and reprocessing of tissue is accomplished by sequentially putting the specimen (such as any organelle, cell, cell suspension, tissue section, or tissue specimen) to be processed or reprocessed in contact with, or immersed in, a series of reagents under controlled conditions. The reagents may be divided into three types: paraffin, solvents and aqueous solvents. The conditions that can be controlled while the tissue is in contact with a reagent can be any combination of heat, pressure, vacuum and agitation.

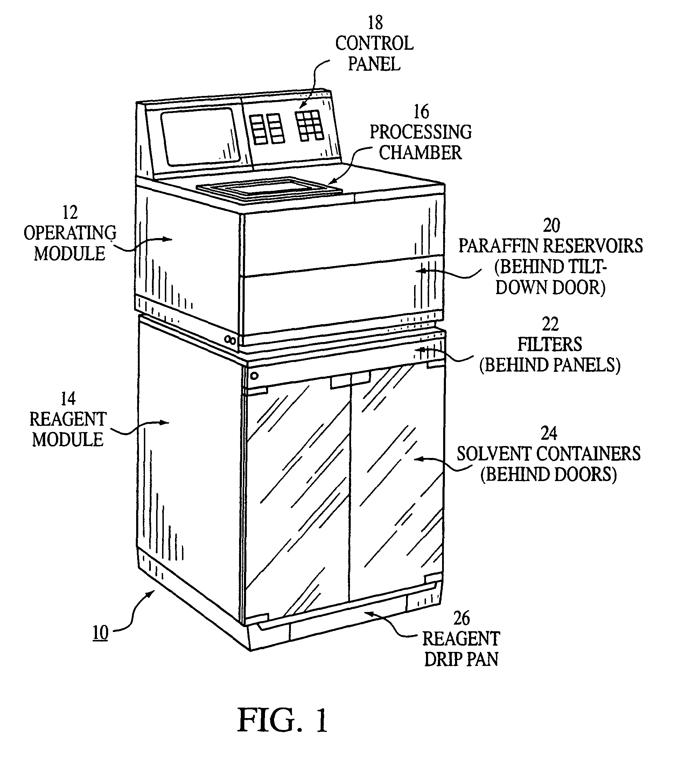

Referring to Figure 1, there is shown one example of a tissue reprocessing system 10. The tissue processing and reprocessing system may consist of two major components: an Operating Module 12 and a Reagent Module 14. The Operating Module and Reagent Module can be placed side-by-side on a benchtop or stacked for a floor mounted configuration, as shown in Figure 1. The specimen is placed in a processing chamber 16, and reagents are sequentially put into the processing chamber 16 from the solvent containers 24, with excess reagents being collected in the reagent drip pan 26 in case of a malfunction. Paraffin is also introduced into the processing chamber 16 with paraffin reservoirs 20. In this apparatus, the control panel 18 indicates the operation of the system 10 and allows for control of the heat, pressure, vacuum and agitation, which affect the processing chamber 16.

An alternative method of putting the specimen in contact with, or immersed in, the reagents is to have each reagent contained in a separate container, and have a mechanical device, such as a robotic arm and controls, to move the specimen from container to container. With this method, the systems for controlling the heat, pressure, vacuum and agitation can, in any combination, be attached to the individual reagent containers or the device for moving the specimen.

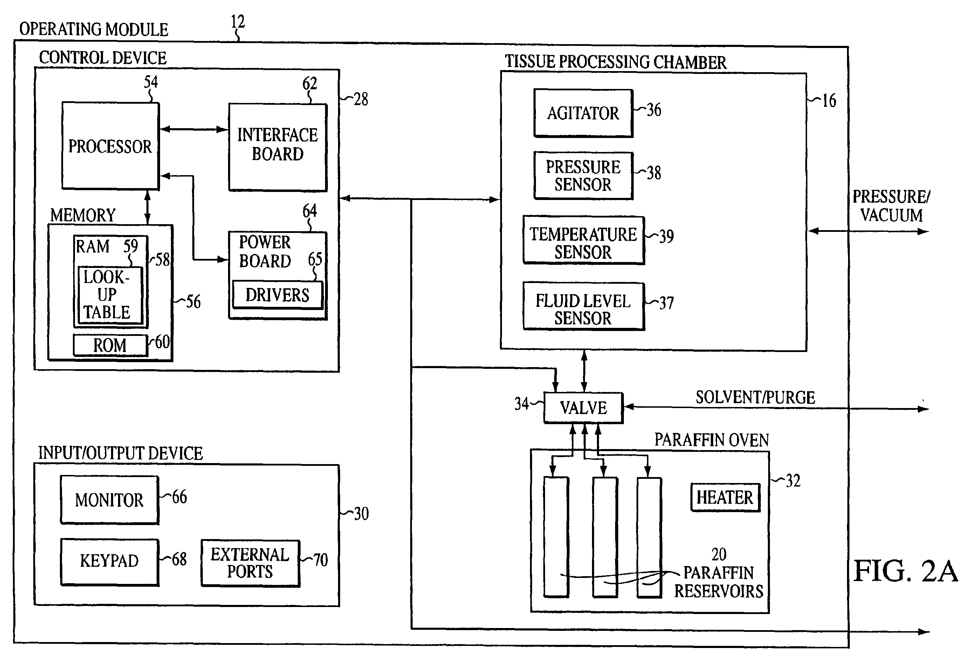

Referring to Figure 2a, there is shown a block diagram of the Operating Module 12. The Operating Module 12 houses the processing chamber 16, the control device 28, Input/Output device 30, and the paraffin oven 32 with three reservoirs 20. The processing chamber 16 inside the Operating Module 12 connects through tubing to valve 34, such as a rotary valve (or other means for regulating flow of a fluid) to the paraffin reservoirs, and through tubing to the reagents in the Reagent Module. In an alternate embodiment, the means for regulating flow of fluid from the paraffin reservoirs to the processing chamber may be performed by any valve, flap, lid, or plug. The processing chamber has an agitator 36, used when the specimen and reagent require stirring. The agitator 36 may be in the form of a rotating stirring device, a recirculating pump, or any other device that causes the reagent to move with respect to the tissue or the tissue to move with respect to the reagent. In addition, the processing chamber has a pressure sensor 38, used to indicate the pressure in the processing chamber 16 to the pressure modifier 44. As described subsequently, the pressure modifier 44 may be accomplished through mechanical means by applying direct mechanical force to the processing chamber through an aneroid, diaphragm, or other mechanical device. The pressure may also be changed by applying pneumatic pressure or vacuum to the processing chamber (*e*.*g*., a compressor (air pump) in the system or an external source of vacuum and/or pressure). This may also be accomplished with a mechanical regulator or by cycling the sources of vacuum or pressure on and off.

The Operating Module 12 also includes the paraffin oven 32. Processing and reprocessing of tissue may include the use of an infiltrating medium such as paraffin. The paraffin is stored in a temperature-controlled container in order to keep the paraffin in a liquid state. The temperature of the paraffin reservoirs 20 can be controlled by applying heat directly to the individual containers or by having the paraffin container(s) in a temperature-controlled chamber (such as an oven 32). The oven 32 maintains the paraffin in a liquid state so the system can draw the paraffin into the processing chamber 16, allowing it to penetrate the samples. The processing chamber 16 connects to the paraffin reservoirs through a heated rotary valve 34, which facilitates paraffin selection. At the proper time in the processing and reprocessing program, the rotary valve 34 permits paraffin from the selected reservoir to flow into the processing chamber, drawn in under vacuum. During the drain cycle, the valve also selects the proper reservoir for the chamber to empty into.

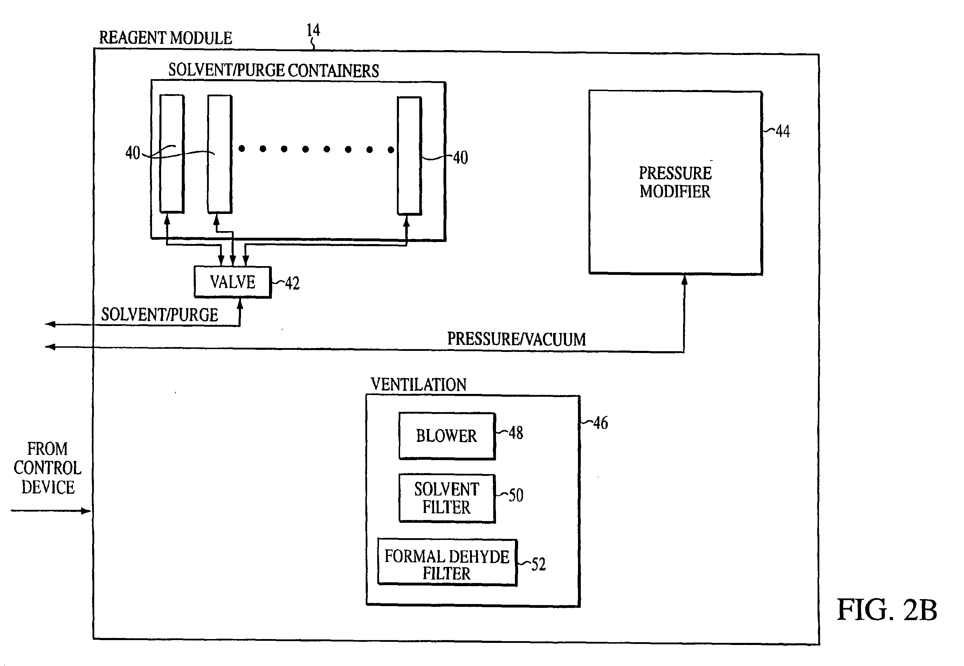

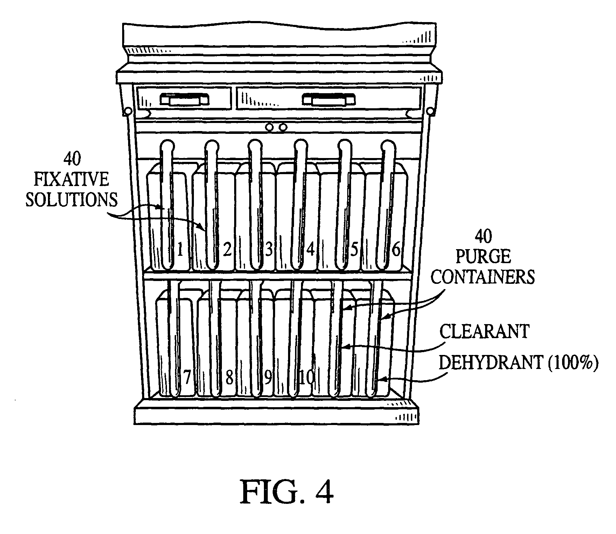

Referring to Figure 2b, there is shown a block diagram of the Reagent Module 14. Processing and reprocessing may require the use of reagents. The Reagent Module 14 contains reagent containers 40 and is connected to the processing chamber 16 in the Operating Module via a solvent/purge line. In one embodiment, the Reagent Module 14 contains twelve reagent containers: ten solvent containers and two purge containers (as shown in Figure 4). The storage temperature of the solvents typically do not need to be controlled and are therefore stored at room temperature. In this arrangement, there is a means for selecting the specific reagent container 40 to move reagents into the processing chamber 16. In one embodiment, the specific reagent container is selected via a set of two valves, one valve 42 (which is set by the processor 54) in the Reagent Module and the second valve 34 (which is set by the processor 54) in the Operating Module. The valve 42 acts as a means for regulating the flow of fluid (which in a preferred embodiment is a liquid and in alternate embodiments may include a liquid, gas or both liquid and gas) between the container 40 and the processing chamber. The valve 42 selects which solvent container connects to the fluid line going to the Operating Module. Thereafter, valve 34 selects which of the paraffin lines or solvent/purge line is connected to the processing chamber. At the proper time in the processing or reprocessing program, the rotary valves 34, 42 (as set by the processor 54) permit only one solvent to flow through the line into the processing chamber, drawn in under vacuum. During the drain cycle, the processor 54 selects the proper setting of valves 34, 42 (as set by the processor 54) for the proper station in order to permit the chamber to empty under pressure. In an alternative embodiment, a valve or other means for regulating the flow of fluid may be mounted on each individual reagent container and connected to a common manifold which connects to the processing chamber. In another embodiment, other means for regulating the flow of liquid between the containers and the processing chamber include any valve, flap, lid, or plug.

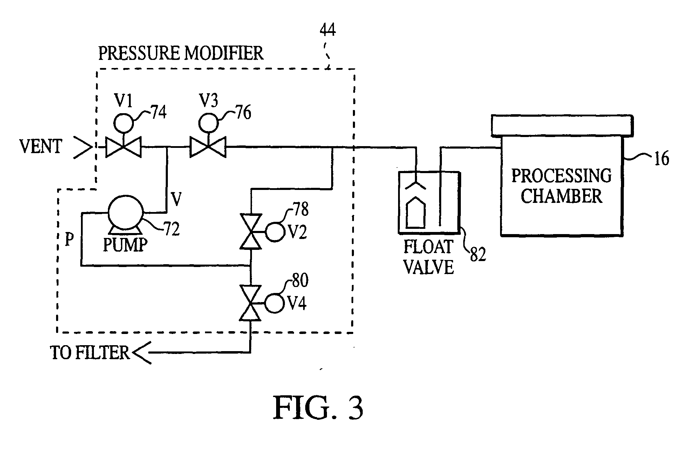

The Reagent Module 14 also has another line to the Operating Module 12 that modifies the pressure in the processing chamber 16. The pressure is modified in the tissue processing and reprocessing system via a pressure modifier 44. As shown in more detail in Figure 3, the pressure modifier 44 serves as a means for introducing and extracting reagents from the processing chamber 16. In one embodiment, this is accomplished by using a pump 72 and a series of valves 74, 76, 78, 80. The pump 72 and valves 74, 76, 78, 80 are contained in the pressure modifier 44 to direct and control the pressure and vacuum. A pressure sensor 38 senses pressure or vacuum in the processing chamber 16. The pump 72 in the Reagent Module cycles on and off as needed to lift fluids into the processing chamber 16 and to drain fluids to their containers 40. In a first state of operation, when valves V1, V2 (74, 78) are closed and valves V3, V4 (76, 80) are open, the pump 72 acts to create a vacuum in the processing chamber 16. In this manner, liquids are drawn into the chamber. Air from the processing chamber 16 is sent to the filter 50, which is described subsequently. In a second state of operation, when valves V3, V4 (76, 80) are closed and valves V1, V2 (74, 78) are open, the pump 72 acts to create a pressure in the processing chamber 16. In this manner, liquids are expelled from the chamber, draining into their respective containers. Air is sent to the processing chamber from a vent. This allows for filling and draining the processing chamber while the specimens remain stationary in the processing chamber. This also permits placing the specimens under vacuum or pressure cycles while immersed in solvents or paraffin to permit thorough infiltration. A pressure differential is created between the storage container and the processing chamber using the pump, to move the reagents. Alternatively, the force of gravity may be used to move the reagents or paraffin. Further, as shown in Figure 3, there is a float valve 82 which prevents reagents from the processing chamber 16 to enter the pressure modifier 44 in the event that the fluid level in the processing chamber 16 is too high.

The Reagent Module 14 has electrical cables for the pump 72, pneumatic valves, 74, 76, 78, 80, rotary valve 42 and blower 48. The Reagent Module 14 features a ventilation system 46 that uses activated charcoal filters to collect solvent fumes before they can escape into the atmosphere. The processing and reprocessing system design reduces the production of fumes. The system handles the fumes from these sources with a built-in ventilating system that filters the air through activated charcoal granules. The system consists of a blower 48 and two filter sections: one for solvent fumes 50, the other for formaldehyde fumes 52. The blower 48 draws air through the Reagent Module 14, up through the filters, and out the back of the unit. This filter system allows operation of the system without the need for a fume hood, external ventilating system, or exhaust fan.

The Operating Module 12 further includes a control device 28. The control device, in one embodiment, may be a general purpose computer. This control device 28 automatically controls and sequences the operation of the heaters, motors, pumps and valves, which are controlled via cables. The control device 28 includes, in a preferred embodiment, a processor 54, and in particular, a Hitachi HD-64180 (Z-80) microcontroller. The control device may also include an electro-mechanical timer, an embedded microprocessor circuit, a programmable logic controller, an external computer, or any combination of the above. The control device 28, in one embodiment, contains memory 56 or other computer readable storage medium, including both random access memory (RAM) 58 and read only memory (ROM) 60 in the form of an erasable programmable read only memory (EPROM). The EPROM contains the system operating program and the text and screen formats for the display. Referring to Appendix A and incorporated herein by reference, there is listed the software having a set of instructions for reprocessing of a specimen. The software is written in Z-80 assembly programming language and is executed on the Hitachi HD-64180 (Z-80) microcontroller.

The control device 28 reads the temperature (via a temperature sensor 39), pressure (via a pressure sensor 38) and the processing chamber fluid level (via a fluid level sensor 37) through the Interface Board 62 and controls the heaters and motors through the Power Board 64. The Power Board 64 contains the drivers 65 for the motors 72, heaters 21, valves 34, 42 and the stirrer 36.

The control device 28 further communicates with the Input/Output device 30 or other user interface. The Input/Output device 30 includes a control panel 18 featuring a monitor 66 such as liquid crystal display (LCD) for displaying menus, instructions and message. The Input/Output device 30 also includes a keypad 68, such as a numeric keypad and an alpha-numeric keyboard or other means for input such as a mouse. The LCD screen assists in programming and operating the system. Through menus, the screen shows status, guides the operator in writing and running reprocessing programs, and serves a variety of maintenance functions. During processing, the monitor 66 shows where specimens are in the cycle, the time in each station, the solution in that station, temperature, and vacuum or pressure. The Input/Output device 30 further includes external ports 70 for connections to external devices such as a printer or a phone line.

The control device 28, in combination with the Input/Output device 30, gives the system its programming flexibility. The operator can program each of the stations (twelve solvent stations and three paraffin stations) for process time, temperature, vacuum or pressure. The monitor 66 displays all parameters to help the operator while writing the program. A variety of menus give the operator the flexibility of performing a variety of maintenance and service procedures. A special help function gives on-screen assistance at any time without affecting the present status. The operator can tailor processes to match tissue requirements for different solutions and soaking times as well as a combination of heat, pressure and vacuum.

### Processing and Reprocessing Cycles

A processing and reprocessing cycle, in one embodiment, consists of filling the processing chamber with a reagent, processing for a programmable amount of time under conditions of controlled temperature, pressure (or vacuum) and agitation. Then draining the reagent back into its storage container. Examples of cycles of the specimen reprocessing and processing system are the fill cycle, the drain cycle and the process cycle.

### Fill Cycle

As described previously, four pneumatic valves V1, V2, V3, V4 (74, 76, 78, 80) and the pump 72 perform these cycles, all under computer control.

Before the fill cycle, the system checks that the paraffin oven 32, processing chamber 16 and rotary valve block 34 are up to the programmed temperature. The system then vents the processing chamber 16 and calibrates the pressure sensor 38. The solvent rotary valve 42 moves to the proper position for the selected station and the processing chamber rotary valve 34 moves to the closed position for that station. The system then sets the solenoid valves for vacuum and starts the pump 72. This verifies that the processing chamber 16 and pressure modifier 44 do not leak. If the processing chamber 16 cannot maintain vacuum, the solenoid valves cycle five times to clear any contamination from the valve seats. The system makes a second attempt to establish vacuum in the chamber. If the processing chamber 16 still cannot maintain vacuum, the system goes to error standby.

If the system successfully established vacuum, then the system vents the processing chamber 16. The processing chamber rotary valve 34 moves to the open position for the selected station. The system sets the solenoid valves 74, 76, 78, 80 for vacuum and cycles the pump 72 on and off to maintain fill vacuum (4 In. Hg for Stations 1-6, 6 in. Hg for Stations 7-10 and purge stations 15 and 16, 2 in. Hg for paraffin stations 11-13, as shown subsequently in Table 1). The system maintains vacuum until the solution triggers the selected level sensor. The processing chamber rotary valve 34 then closes, and the system vents the processing chamber 16.

### Drain Cycle

At the beginning of the drain cycle, the system verifies that the paraffin oven 32, processing chamber 16 and valve block 34 are up to temperature. The system then vents the processing chamber 16 and calibrates the pressure sensor 38 by waiting until there is no change in pressure for 1/4 second. The system then stores the pressure sensor reading as the ambient pressure.

The solvent rotary valve 42 moves to the selected station if the station is a solvent station, then the processing chamber rotary valve 34 moves to the closed position for that station. The system next sets the solenoid valves for pressure 74, 76, 78, 80 and starts the pump 72. Similar to the fill cycle, it does this to verify that the processing chamber 16 and the pressure modifier 44 do not leak. If the processing chamber 16 cannot maintain pressure, the solenoid valves will cycle five times to clear any contamination from the valve seats. The system then makes a second attempt to establish pressure in the processing chamber. If the processing chamber still cannot maintain pressure, the system goes to error standby.

The system then releases pressure. The processing chamber rotary valve 34 moves to the open position for the selected station. The system sets the solenoid valves 74, 76, 78, 80 to pressure and the pump 72 starts cycling on and off to maintain drain pressure (1 psi). The system will maintain drain pressure until the processing chamber 16 can no longer hold pressure, indicating that it is empty (the system senses this by the duration of the pump's running cycle). When the system can no longer hold pressure, it vents the processing chamber 16, then waits five seconds for any remaining fluid to collect in the bottom of the processing chamber 16 and its associated plumbing. The system then sets the solenoid valves 74, 76, 78, 80 to pressure, and turns the pump 72 on for two seconds to clear the processing chamber 16 and plumbing of any remaining fluid. The system then vents the processing chamber 16 to release any remaining pressure.

### Process Cycle

A programming option allows the specimen processing and reprocessing system to alternate pressure and vacuum while processing or reprocessing tissue to enhance the infiltration of the tissue samples. During programming, the operator sets the values: up to 0.476 atm (seven pounds per square inches) of pressure and a vacuum of up to 379.95 mm Hg (fifteen inches of mercury). Before the system begins the pressure cycle, it vents the pump while maintaining pressure in the processing chamber. The system does this so that the pneumatic pump starts with no load. After the system starts the pump 72, it sets the solenoid valves 74, 76, 78, 80 to pressure. The cycle runs for 3 minutes at each setting, alternating between vacuum and pressure.

### Processing of Specimen

As one example of the specimen processing and reprocessing system, the reagents are arranged in 15 "stations" (3 paraffin stations and 12 solvent stations).

**Table 1 - Reagent Stations**

| **Station** | **Reagent** | **Concentration** | **Description** |
|---|---|---|---|
| 1 | Formalin | | Fixative |
| 2 | Formalin | | Fixative |
| 3 | Isopropyl Alcohol | 70% | Dehydrant |
| 4 | Isopropyl Alcohol | 95% | Dehydrant |
| 5 | Isopropyl Alcohol | 95% | Dehydrant |
| 6 | Isopropyl Alcohol | 100% | Dehydrant |
| 7 | Isopropyl Alcohol | 100% | Dehydrant |
| 8 | Alcohol/Xylene | 50/50 | Dehydrant |
| 9 | Xylene | | Clearant |
| 10 | Xylene | | Clearant |
| 11 | Paraffin | | |
| 12 | Paraffin | | |
| 13 | Paraffin | | |
| 14 | Xylene | | Purge Clearant |
| 15 | Isopropyl Alcohol | 100% | Purge Dehydrant |

Depending on the needs in processing the specimen, any number of stations may be present in the machine. In an alternative embodiment in which the specimen is moved from one container of reagents to the next, there may be 15 such containers, as corresponding to the reagents in Table 1, with as a robotic arm and controls to move the specimen from container to container as necessary.

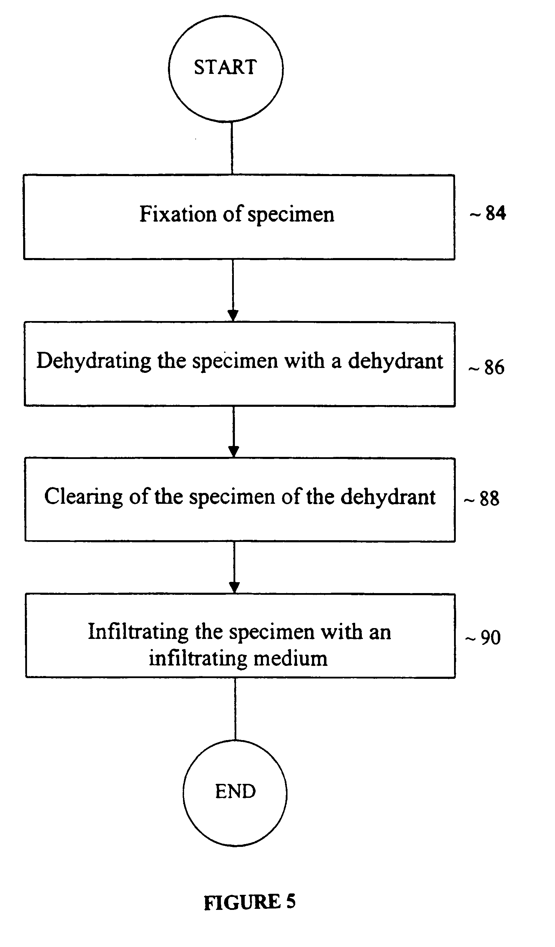

Referring to Figure 5, there is shown a flow chart of a processing of a specimen. The first step involves fixation of the specimen, as shown at block 84. This typically involves immersing the specimen in Formalin, a fixative. In one embodiment of the invention, the specimen is immersed in, subjected to or exposed to a fixing agent at a station, or a multitude of stations, in a processing machine (*see e*.*g*., Stations 1 and 2, as shown in Table 1). However, in processing of the sample, the operator may choose to use both stations, only one station or none of the stations (if the specimen has already been immersed in or exposed to a fixative). The specimen is then dehydrated using a dehydrating agent such as alcohol, as shown at block 86. In one embodiment of the invention, the specimen is dehydrated by immersion in, exposure to or being subjected to a series of alcohol reagents with increasing concentration (*see e*.*g*., Stations 3-8, as shown in Table 1). The operator of the processing machine may design a single, or a series, of exposures to alcohol depending on the amount of water contained in the specimen. Thereafter, the specimen is cleared of the dehydrant using a clearing agent, such as xylene (*see e*.*g*., Stations 9 and 10, as shown in Table 1), as shown at block 88. Again, depending on processing needs, the specimen may be immersed in, exposed to, or subjected to a single station or both stations. Thereafter, the specimen is infiltrated with an infiltrating medium such as paraffin (*see e*.*g*., Stations 11-13, as shown in Table 1), as shown at block 90.

After the specimen has been processed, the machine should be cleaned in order to minimize contaminants of the reagents upon next use the machine. First, a purge clearant, such as xylene, is used in order to clean the paraffin in the processing chamber and the rotary valve on the processing chamber. Second, a purge dehydrant is used to clean any oily residue, or other contaminants, which may be left in the processing chamber. The purge clearant at station 14 is considered to have more impurities of paraffin and other contaminants than, for example, the clearant at station 9. Further, the purge dehydrant at station 15 is considered to have more impurities of oily residue and other contaminants than, for example, the clearant at station 8.

After the tissue has been processed, it is infiltrated with paraffin, embedded in a paraffin block, and sliced into sections using a microtome. At that point, the operator can determine if the specimen has been processed properly. In one instance, the operator may wish to reprocess the remainder of the sample (*i*.*e*., the portion of the specimen which has not been sliced up) until the rehydration of the specimen with an aqueous fluid (to a fixing agent, such as formalin, or to water). If that is the case, the operator indicates, via the control panel 18, that the specimen is to be reprocessed. In addition, if the operator wishes to reprocess a section of the specimen, such as for ploidy analysis, the operator indicates, via the control panel 18, to reprocess the specimen.

### Reprocessing of Specimen

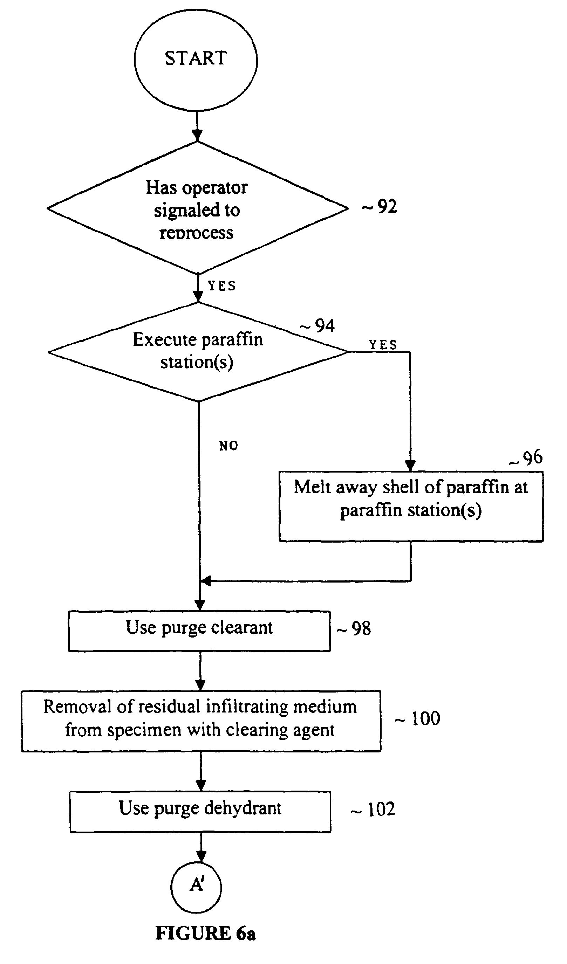

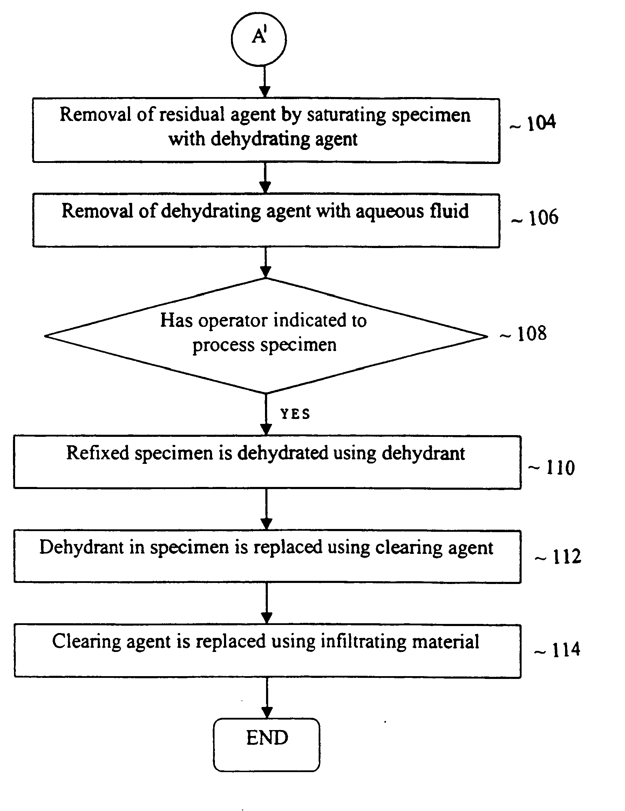

Referring to Figure 6a, there is shown a flow chart of the automatic reprocessing of the tissue until rehydration of the specimen and then processing of the specimen. The system, in one embodiment, may wait until the operator has signaled to reprocess the specimen, as shown at block 92. The software therefore has an initiating routine, waiting until the operator has initiated reprocessing. To reprocess tissue, the infiltrating medium is first removed. Typically, a specimen is not only infiltrated with a medium, but also embedded or encased in the same medium. For example, a specimen may be infiltrated with paraffin, and for ease of slicing, may also be embedded or enveloped with a paraffin shell. To remove the paraffin shell, the operator may simply slice the shell away from the specimen with a knife. Otherwise, the operator may allow the reprocessing machine to remove the shell of paraffin, as shown at block 94. Operator input, via the control panel 18, indicates whether the paraffin station(s) are to be used. This may optionally be done by running processing cycles with one or more paraffin stations. *(see e.g.,* Stations 11-13, as shown in Table 1). The shell of paraffin is removed from the specimen by raising the temperature of the tissue to the melting point of the paraffin that has infiltrated the tissue, as shown at block 96.

If the paraffin stations have already been run, the valve 34 and processing chamber 16 are contaminated with paraffin; therefore, the purge clearant should be used. As described previously, the purge clearant is typically used in cleaning the valve 34 and processing chamber 16 when processing a sample. Thus, the purge clearant is already contaminated with paraffin and may clean the valve 34 and processing chamber 16. As a general matter (even if the paraffin station(s) have not been run), the order of the clearant stations may optionally be from the most contaminated (with paraffin) to the cleanest. This is due to the fact that in removing the paraffin, the clearing agent may become contaminated. In order to avoid contamination of the "cleaner" clearants, the purge clearant should be used first. Otherwise, the cleaner clearants (such as Stations 9 or 10) would be contaminated with paraffin if used directly after a paraffin step. If that were the case, upon processing of a sample again, the clearant in station 9 or 10 would have to be replaced due to contamination. Therefore, the specimen is immersed in, subjected to or exposed to a purge clearant first, as shown at block 98. (*see e*.*g*., Station 14, as shown in Table 1). Typically, the specimen is immersed or exposed to the purge clearant for about 20 minutes with the agitator 36 mixing.

The next step is the removal of residual infiltrating medium from a specimen with "cleaner" clearing agent(s) (an agent that is miscible with the embedding and dehydrating agent), as shown at block 100. This is done by running processing cycles with one or more clearant stations, depending on the needs of reprocessing. (*See e*.*g*., Stations 9 and 10, as shown in Table 1). The clearant typically used to remove the paraffin is Xylene.

Again, the valve 34 and the processing chamber 16 may be contaminated with an oily residue left by the clearant. Therefore, the specimen may optionally be immersed in, subjected to or exposed to a purge dehydrant before other dehydrants, as shown at block 102. (*see e*.*g*., Station 15, as shown in Table 1). As described previously, the purge dehydrant is typically used in cleaning the valve 34 and processing chamber 16 when processing a sample. Thus, the purge dehydrant is already contaminated. Otherwise, the cleaner dehydrants (such as stations 3-8) would be contaminated with the oily residue if used directly after a clearant step. If that were the case, upon processing of a sample again, the dehydrants would have to be replaced due to contamination. Therefore, the specimen may be immersed or exposed to the purge dehydrant for about 20 minutes with the agitator 36 mixing.

The next step is the removal of the residual clearing agent by saturating the specimen with a dehydrating agent, as shown at block 104. This step is performed whether or not the purge dehydrant is used. This is accomplished by running processing cycles with dehydrants (typically alcohol) with successively higher concentrations of water in which the specimen is immersed in, subjected to or exposed to dehydrant(s). One or many of the dehydrant stations may be used, depending on the needs of reprocessing. (*See e*.*g*., Stations 3-8, as shown in Table 1).

The next step is the removal of the dehydrating agent with an aqueous fluid, as shown at block 106 by the specimen immersed in, exposed to or subjected to the aqueous fluid. The aqueous fluid can be used for storage (such as using an aqueous fluid comprised of water) or used to complete the fixation process prior to the repeating of the specimen processing (such as using an aqueous fluid comprised of a fixative such as formalin).

Optionally, the program may wait to determine if the operator has indicated to process specimen, as shown at block 108. The operator may indicate to process specimen at the beginning of the reprocessing sequence, in the middle of reprocessing, or after reprocessing has completed. Alternatively, the program may immediately processes the specimen without operator input.

The fixed specimen is then processed similar to the process steps of Figure 5. In particular, the refixed specimen is dehydrated using a dehydrant (such as alcohol), as shown at block 110. The dehydrant in the specimen is then replaced using a clearing agent (such as xylene), as shown at block 112. The clearing agent is then replaced using an infiltrating medium (such as paraffin), as shown at block 114.

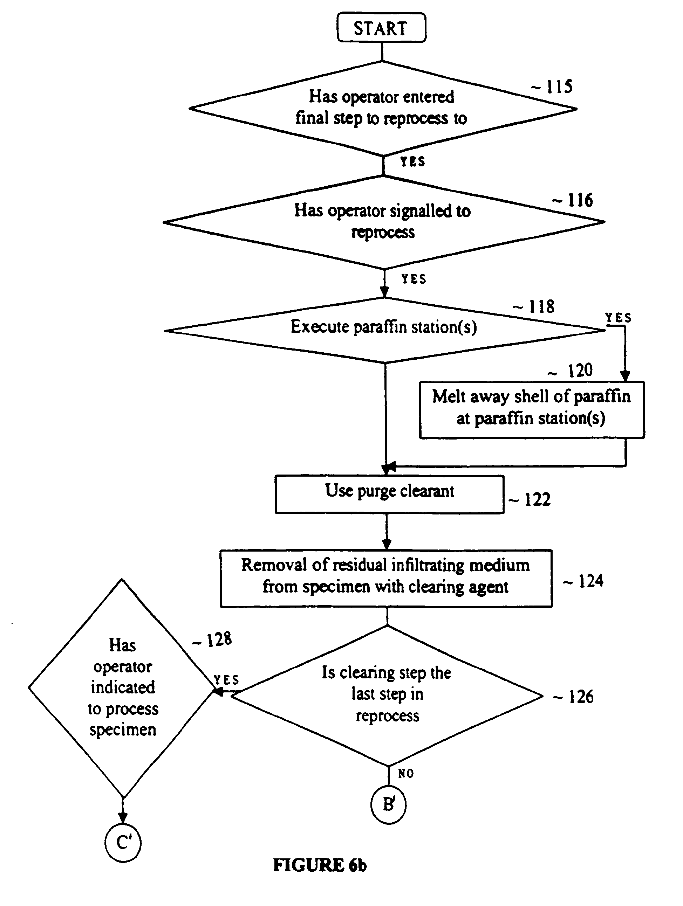

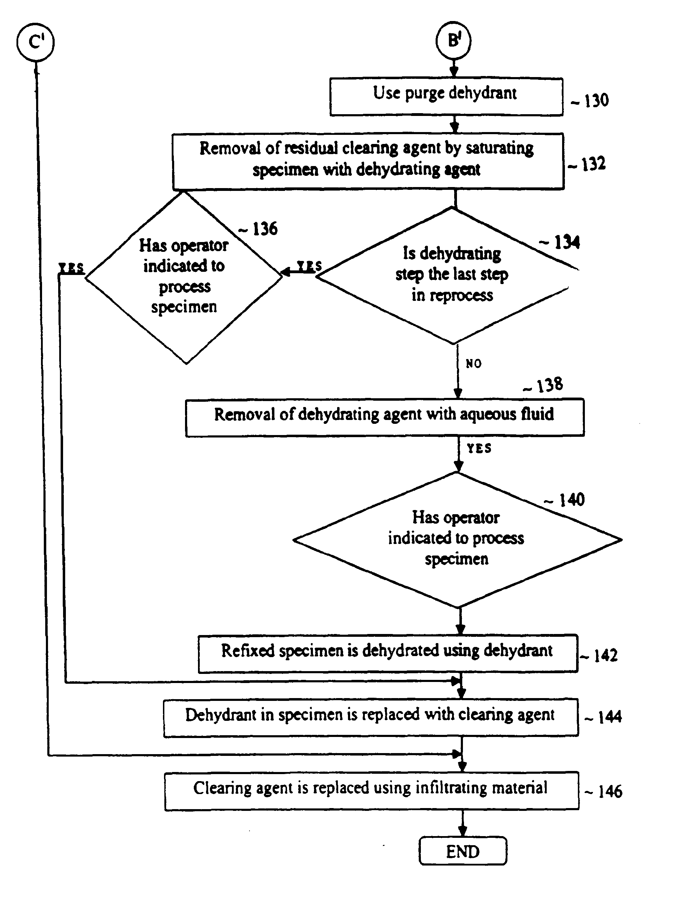

Referring to Figure 6b, there is shown a flow chart of an alternate embodiment of the automatic reprocessing of the tissue and then processing of the specimen. The operator, after slicing of the specimen, may be able to determine which step in the previous processing sequence was faulty. For example, if the clearant in the processing sequence was contaminated, upon processing, the clearant may have failed to clear all of the dehydrant, thus leaving the specimen with residual dehydrant. Based on this observation, the operator may enter in the control panel 18 the step to which reprocessing should be done, as shown at block 115. This entry may be stored in a look-up table 59 in RAM 58, so that upon reprocessing, the software may determine which step to reprocess to. Alternatively, the entry in the look-up table may be the step in the processing sequence which was faulty. In the example given above, the step would be the clearing step. In this manner, the reprocessing program may read the entry in the look-up table 59, and stop the reprocessing either at the faulty step or the step prior to the faulty step.

Similar to Figure 6a, the system waits until the operator has signaled to reprocess the specimen, as shown at block 116. The operator may allow the reprocessing machine to remove the shell of paraffin, as shown at block 118. The shell of paraffin is removed from the specimen by raising the temperature of the tissue to the melting point of the paraffin that has infiltrated the tissue, as shown at block 120. If the paraffin stations have already been run, the order of the clearant stations is from the most contaminated (with paraffin) to the cleanest. Therefore, the purge clearant is used first, as shown at block 122. (*see e*.*g*., Station 14, as shown in Table 1).

The next step is the removal of residual infiltrating medium from the specimen with a clearing agent (an agent that is miscible with the embedding and dehydrating agent), as shown at block 124. Thereafter, the look-up table 59 is examined to determine whether the clearing step is the last or final step in the reprocess, as shown at block 126. If so, the program then determines if the operator has indicated to process the specimen, as shown at block 128. If so, the program goes to the infiltrating step, as shown at block 146. If the clearing step is not the last or final step in the reprocess, the purge dehydrant is used before other dehydrants, as shown at block 130. *(see e.g.,* Station 15, as shown in Table 1).

The next step is the removal of the residual clearing agent by saturating or exposing the specimen with a dehydrating agent, as shown at block 132. This step is performed whether or not the purge dehydrant is used. One or many of the dehydrant stations may be used, depending on the needs of reprocessing. (*See e*.*g*., Stations 3-8, as shown in Table 1).

Thereafter, the look-up table 59 is examined to determine whether the dehydrating step is the last or final step in the reprocess, as shown at block 134. If so, the program then determines if the operator has indicated to process the specimen, as shown at block 136. If so, the program goes to the clearing step, as shown at block 144. If the dehydrating step is not the last step in the reprocess, the next step is the removal of the dehydrating agent with an aqueous fluid, as shown at block 138. Optionally, the program then waits to determine if the operator has indicated to process specimen, as shown at block 140; otherwise, processing begins without operator input. The operator may indicate to process specimen at the beginning of the reprocessing sequence, in the middle of reprocessing, or after reprocessing has completed. The fixed specimen is then processed similar to the process steps of Figure 5. In particular, the refixed specimen is dehydrated using a dehydrant (such as alcohol), as shown at block 142. The dehydrant in the specimen is then replaced using a clearing agent (such as xylene), as shown at block 144. The clearing agent is then replaced using an infiltrating medium (such as paraffin), as shown at block 146.

### Appendix A

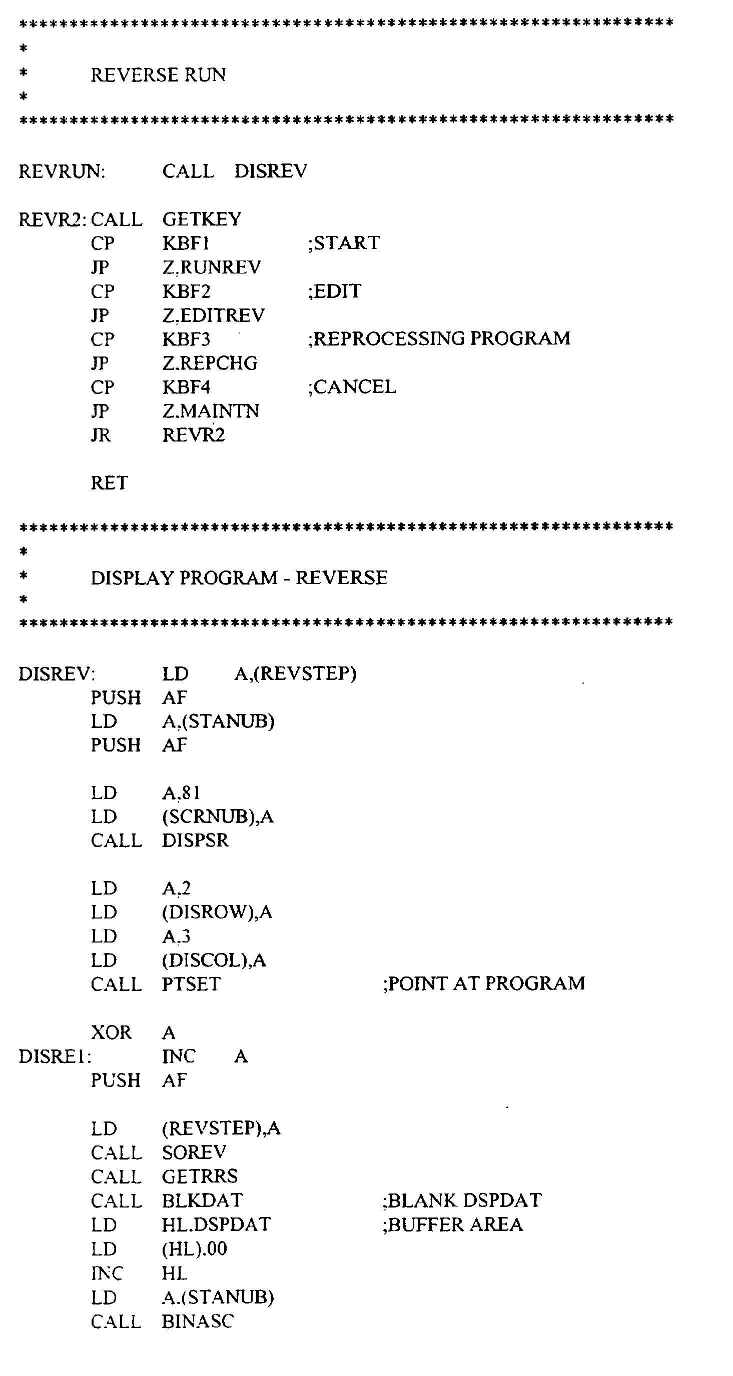

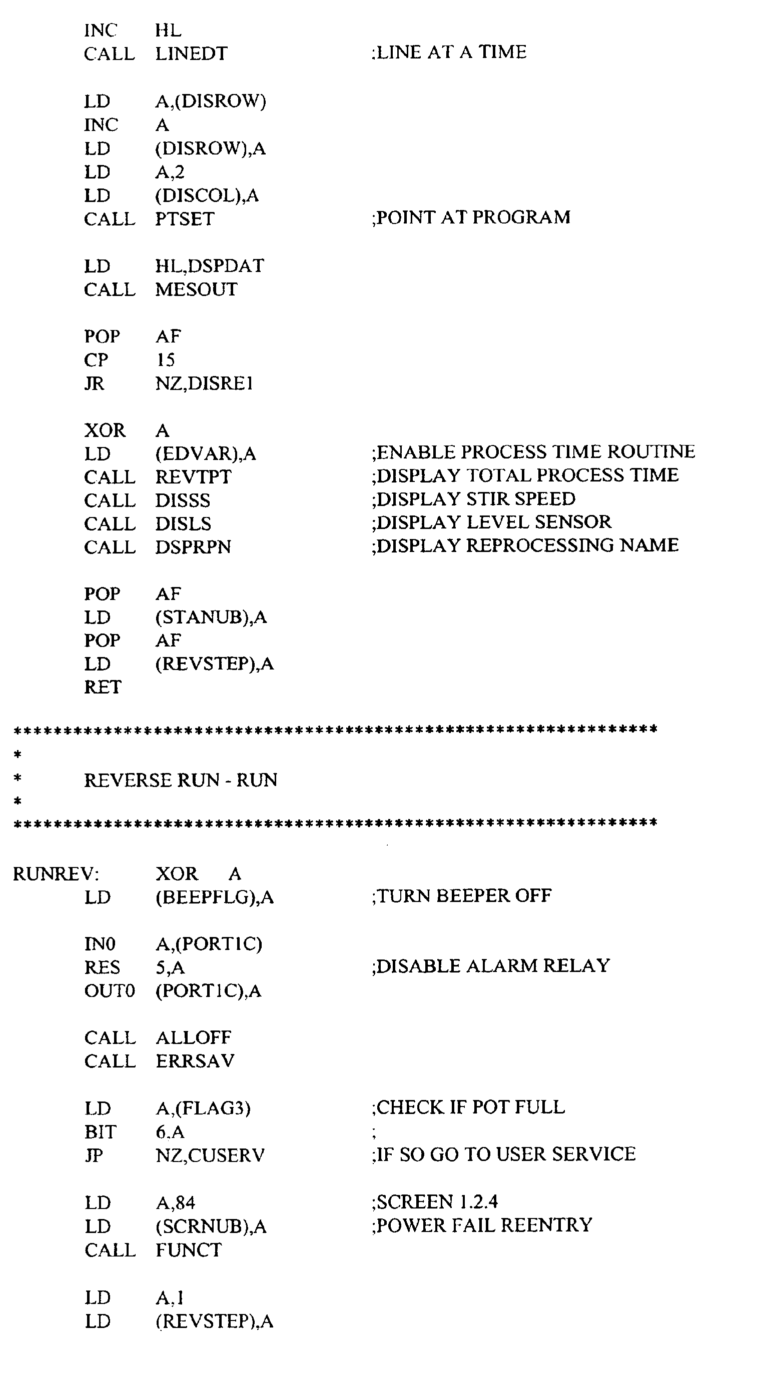

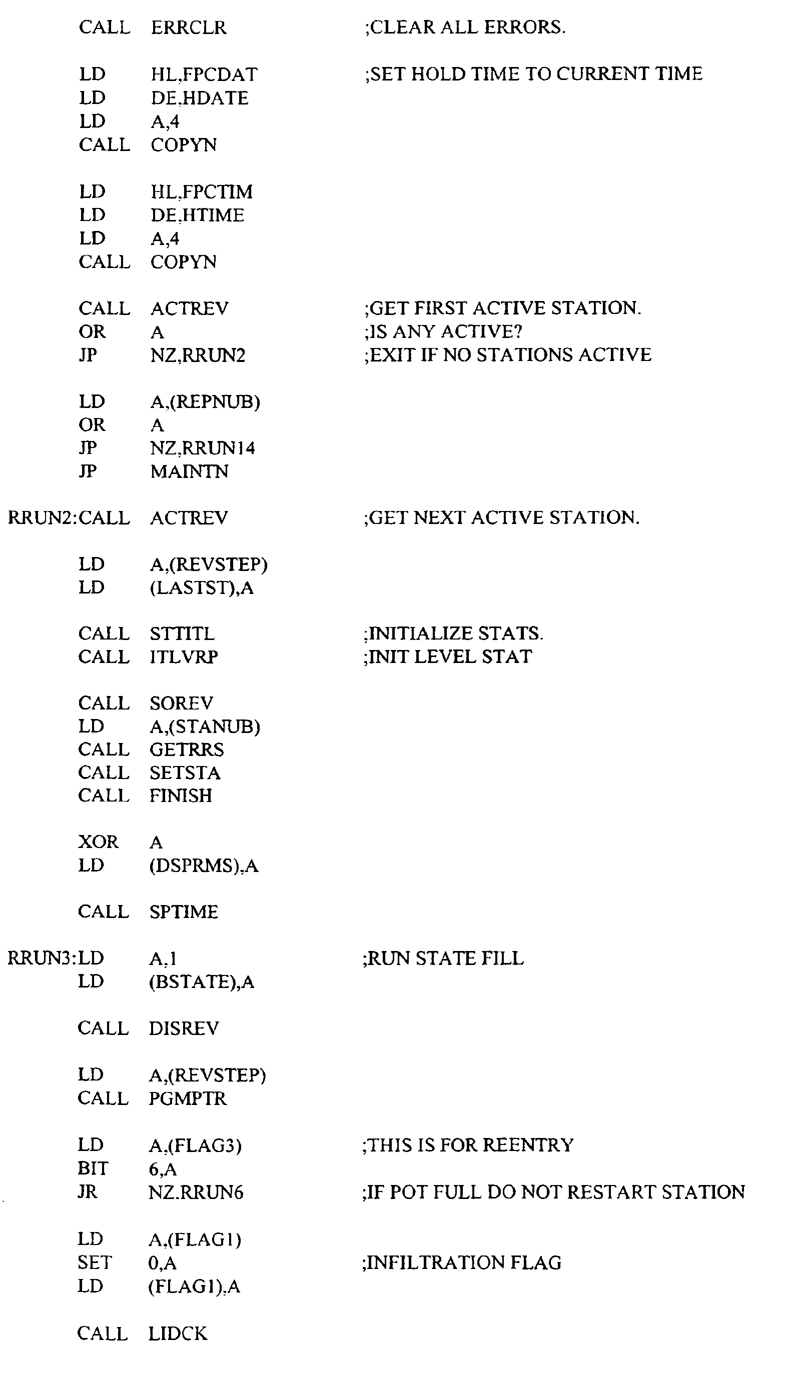

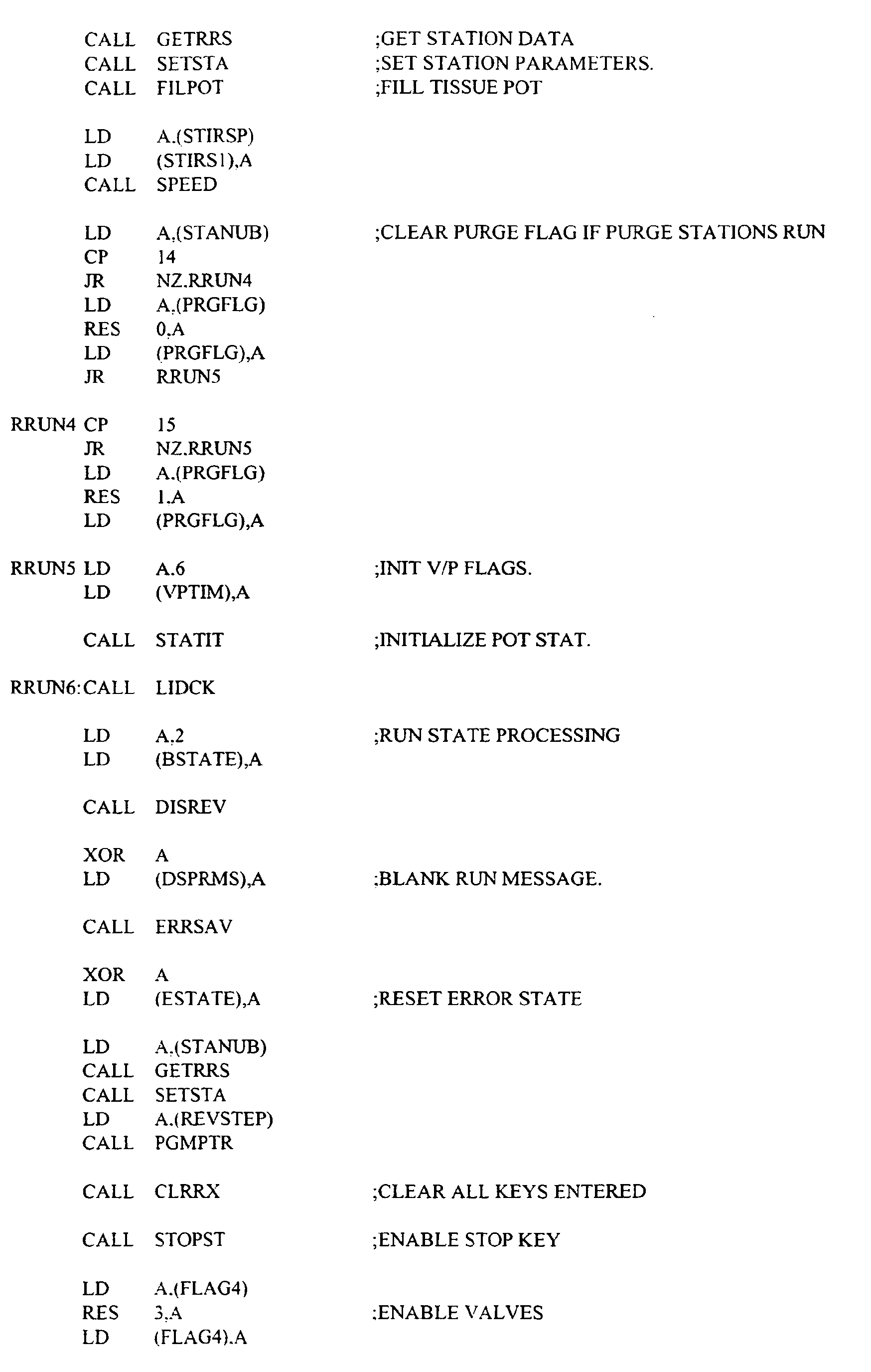

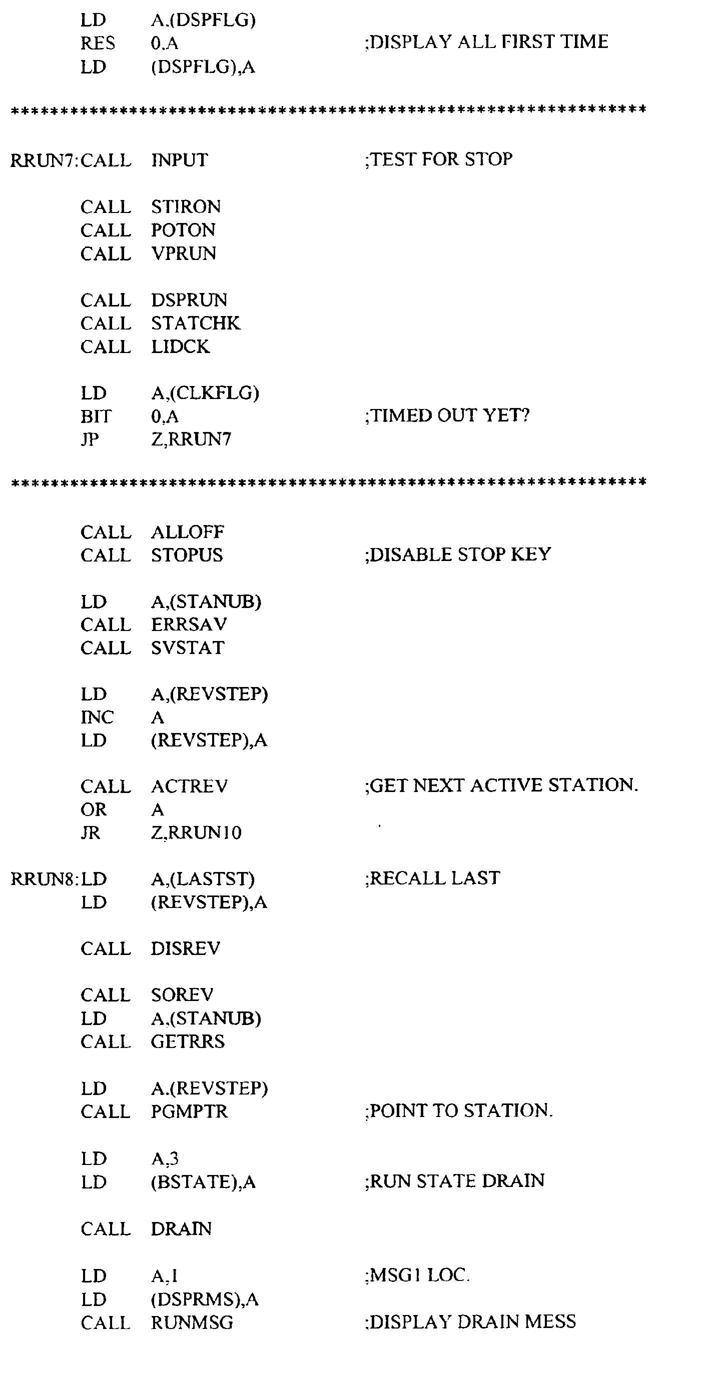

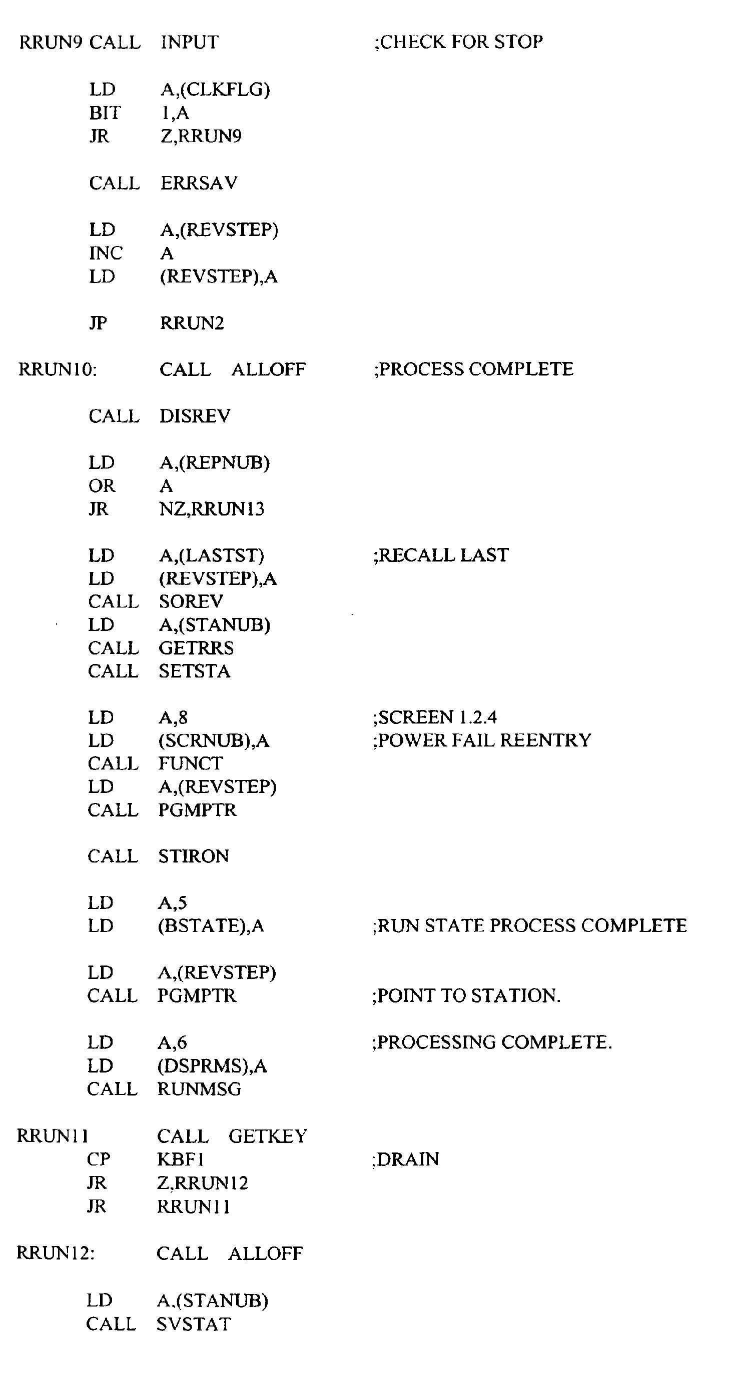

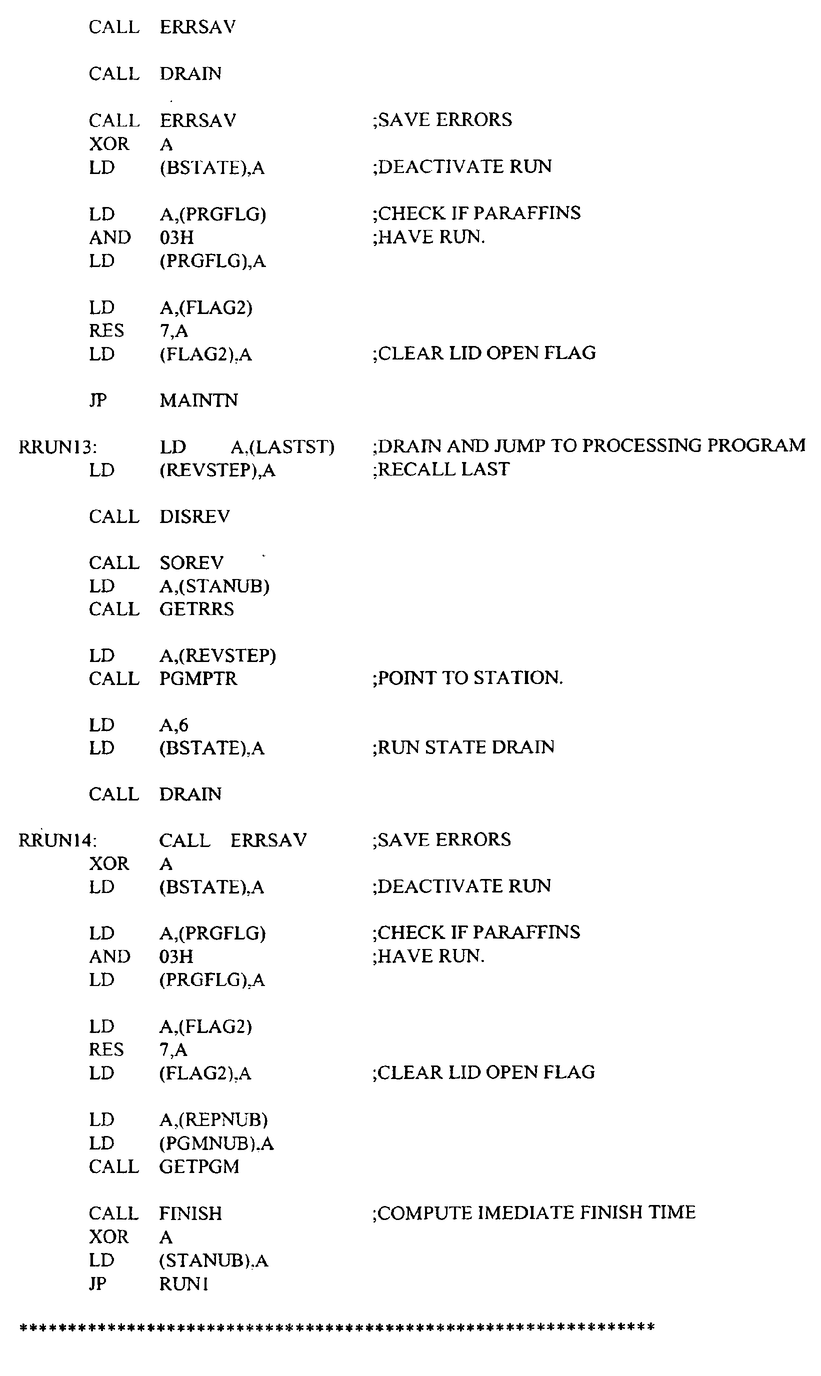

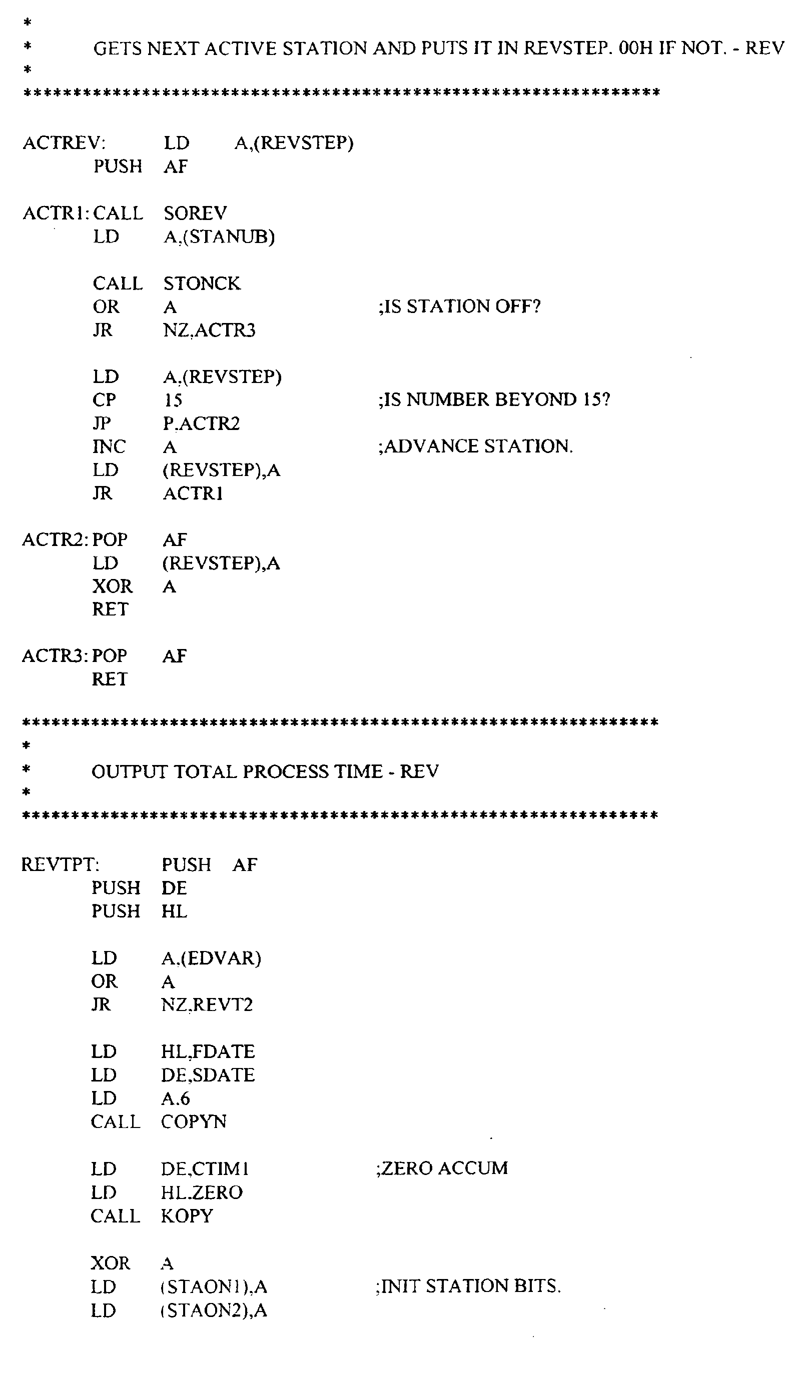

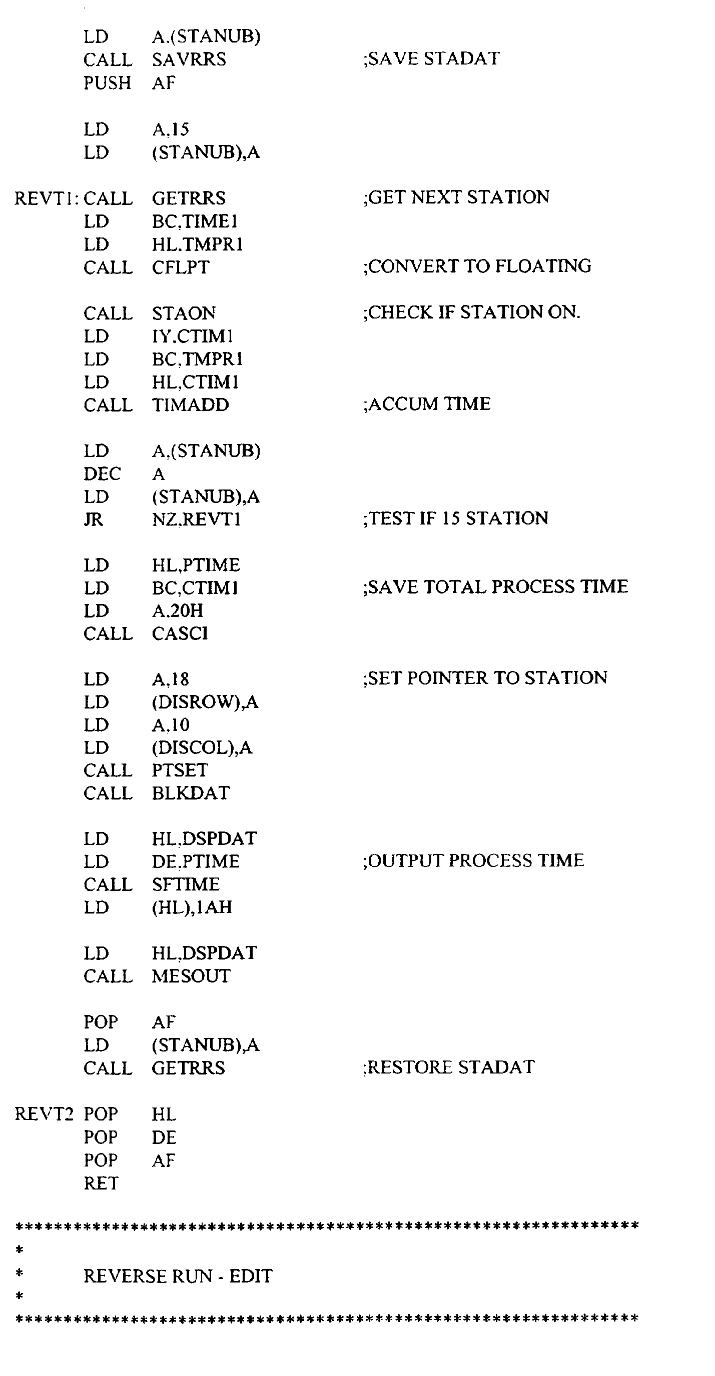

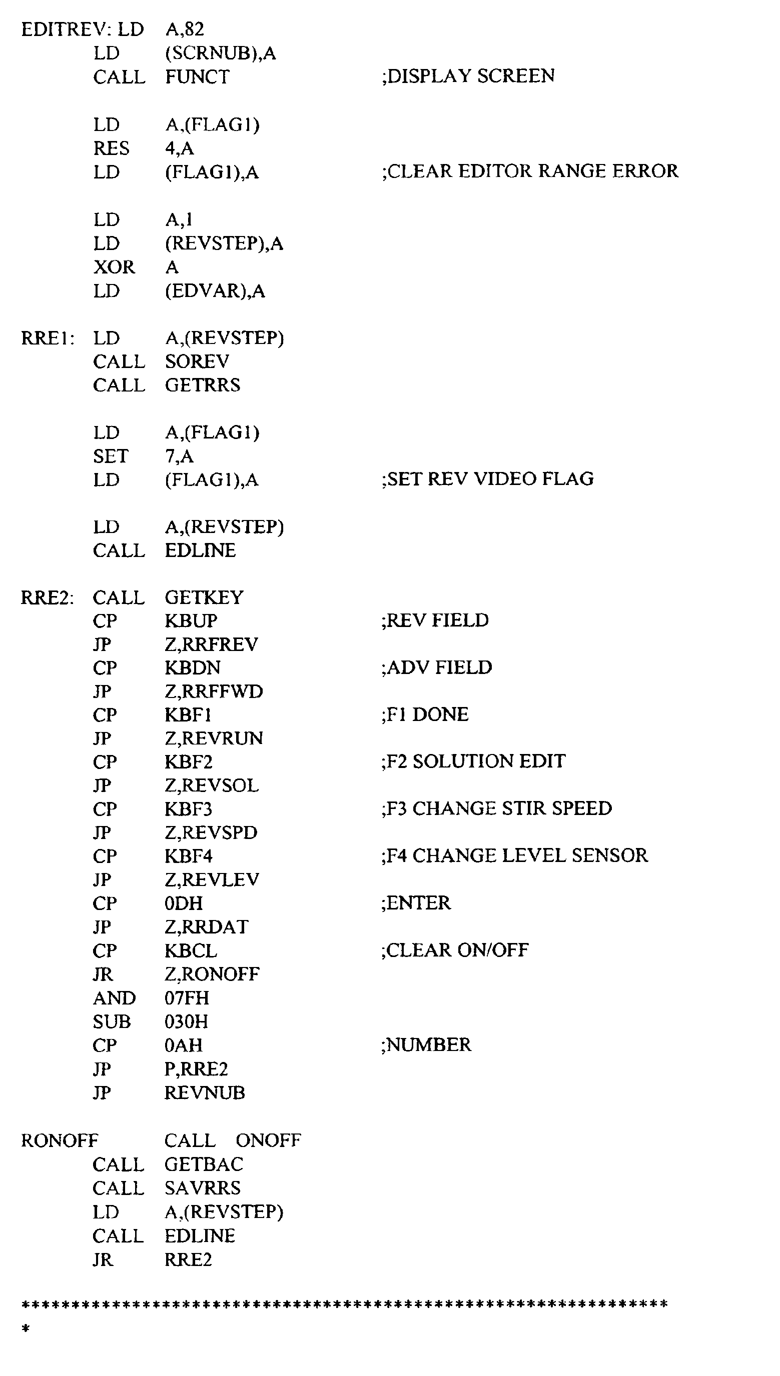

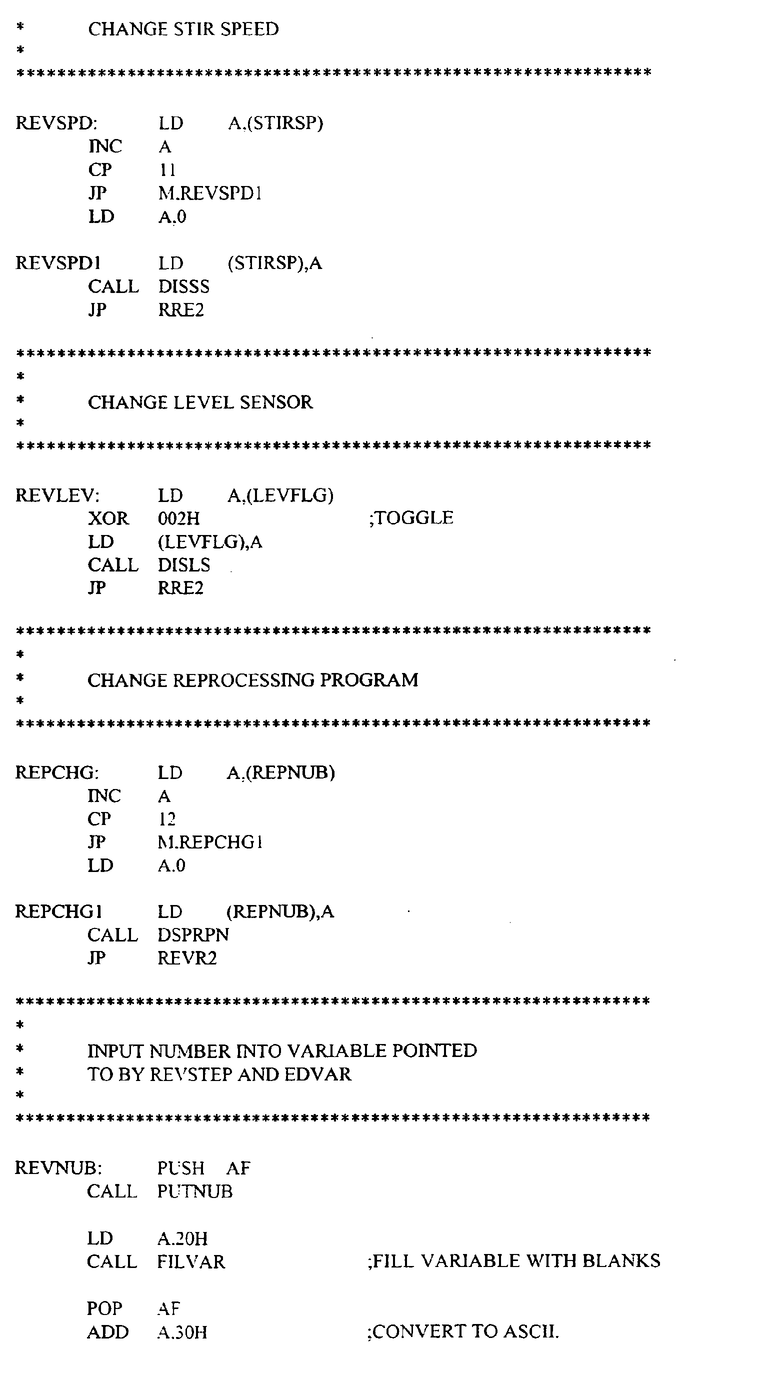

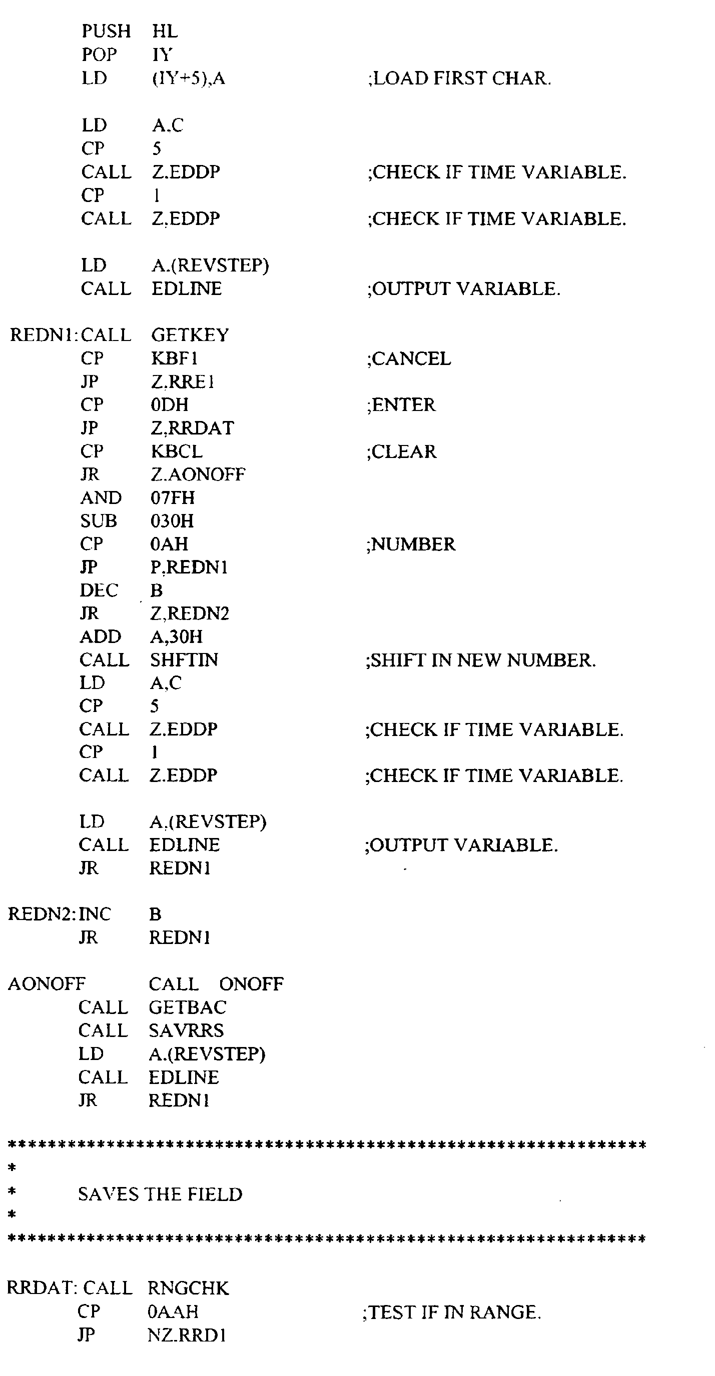

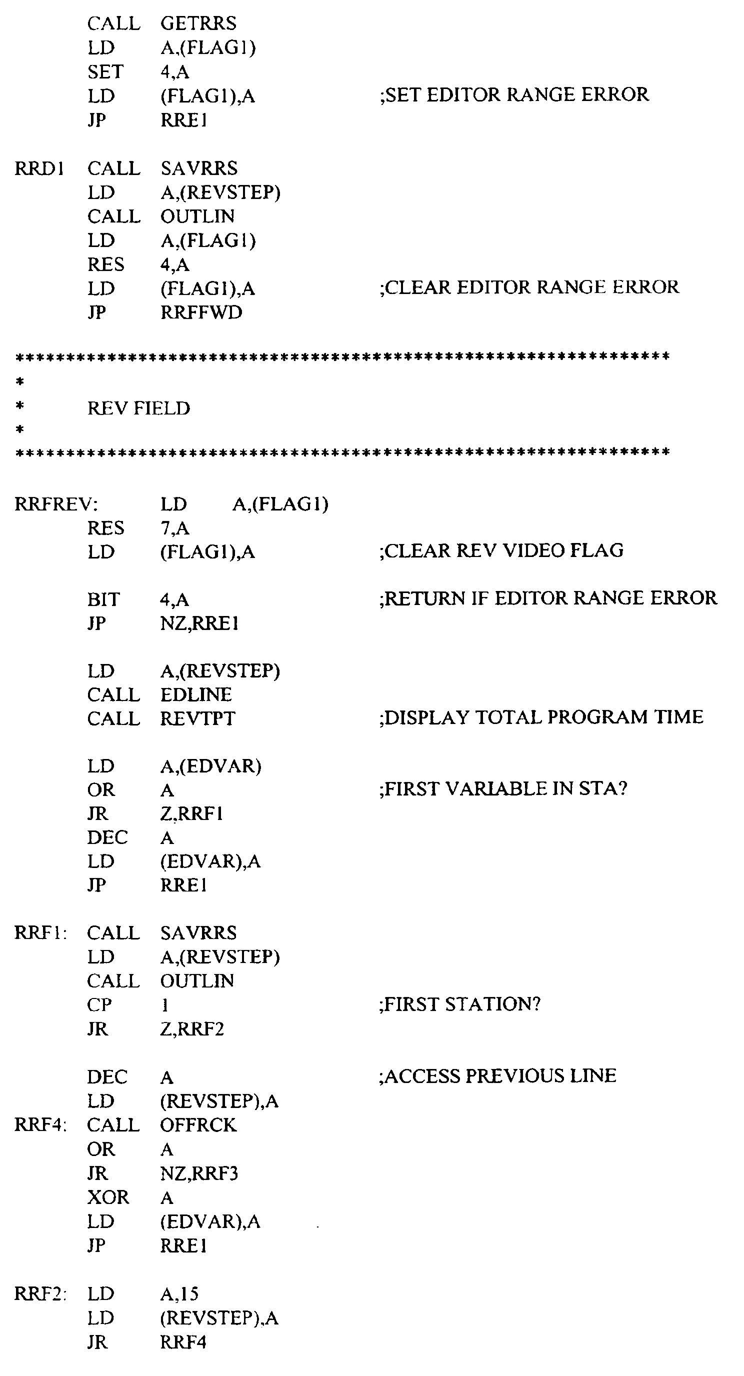

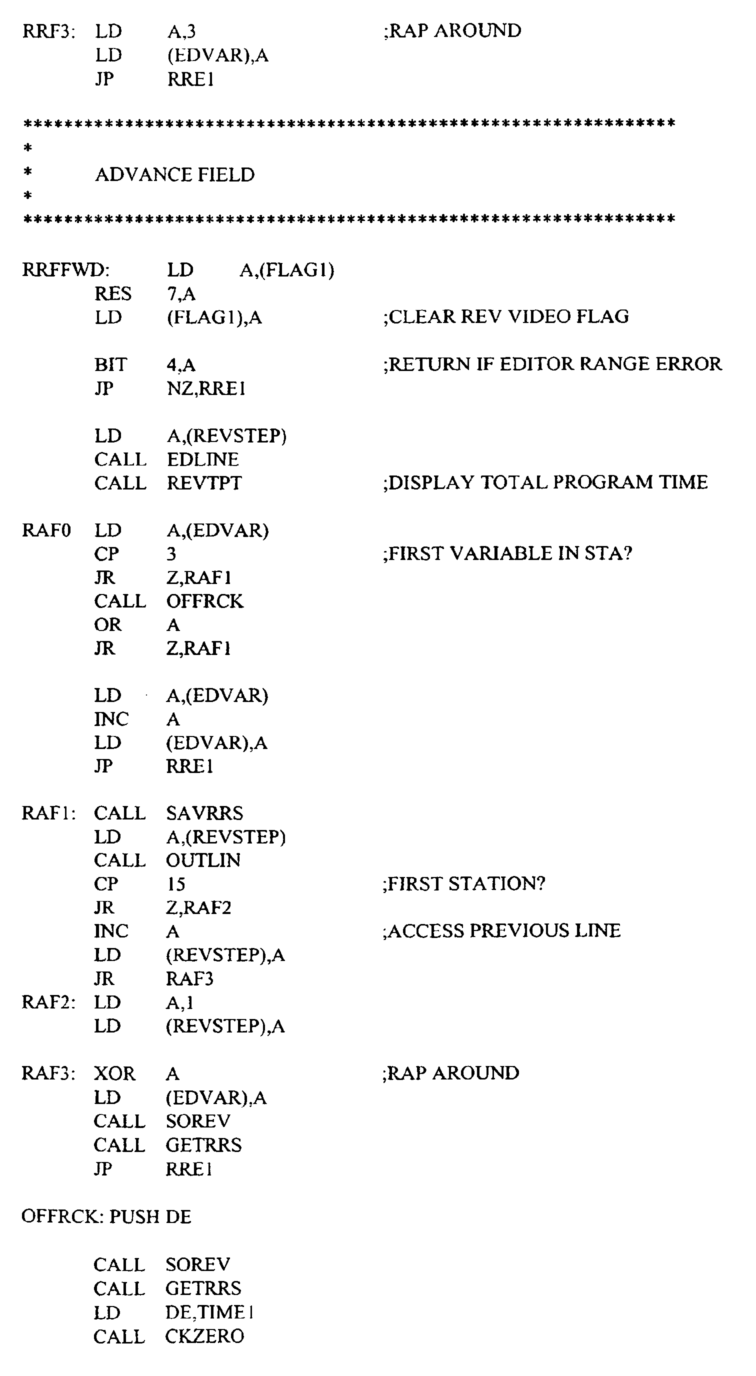

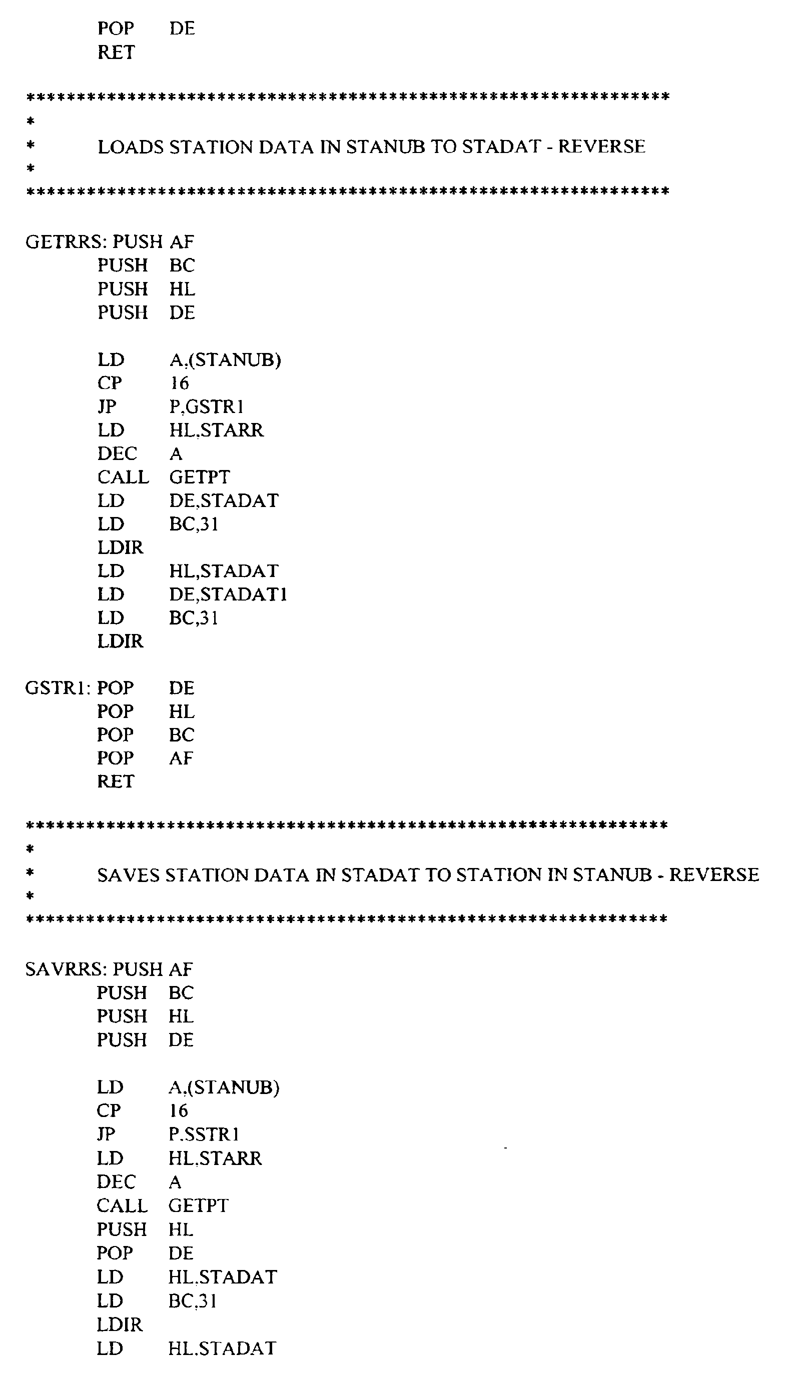

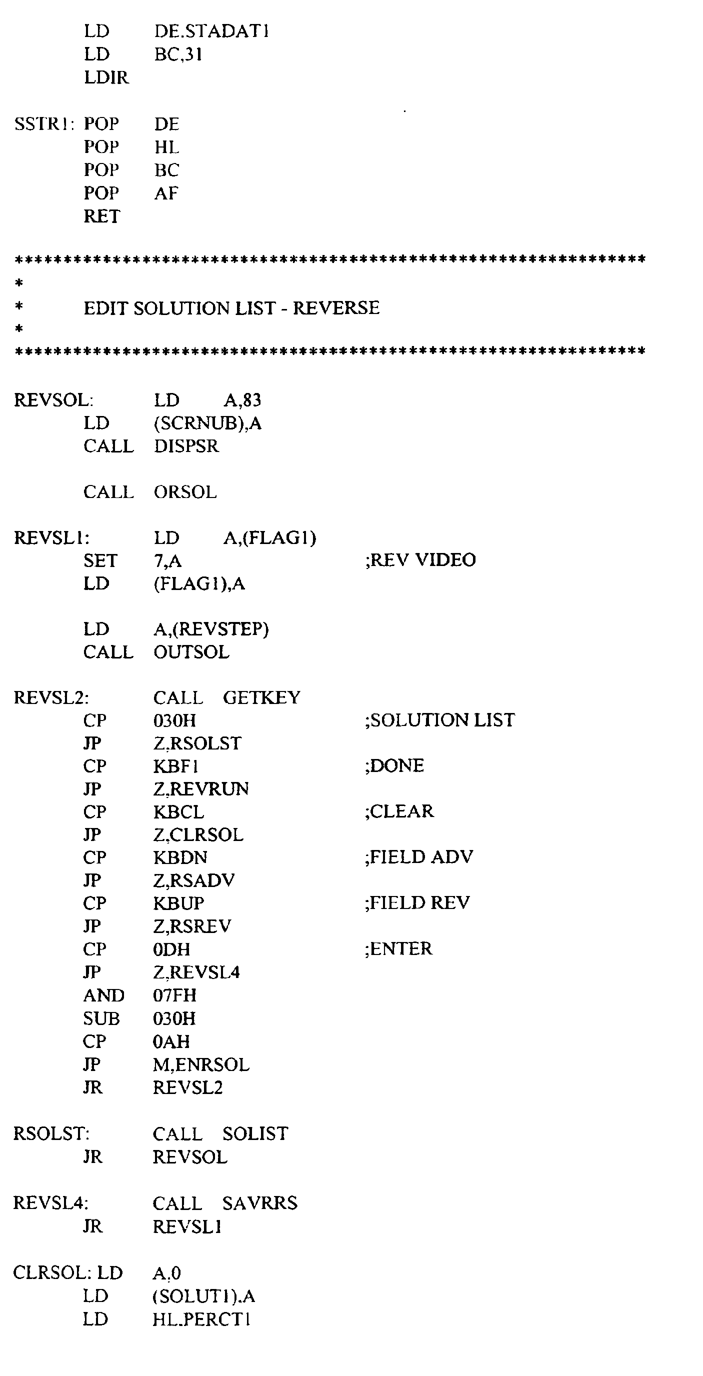

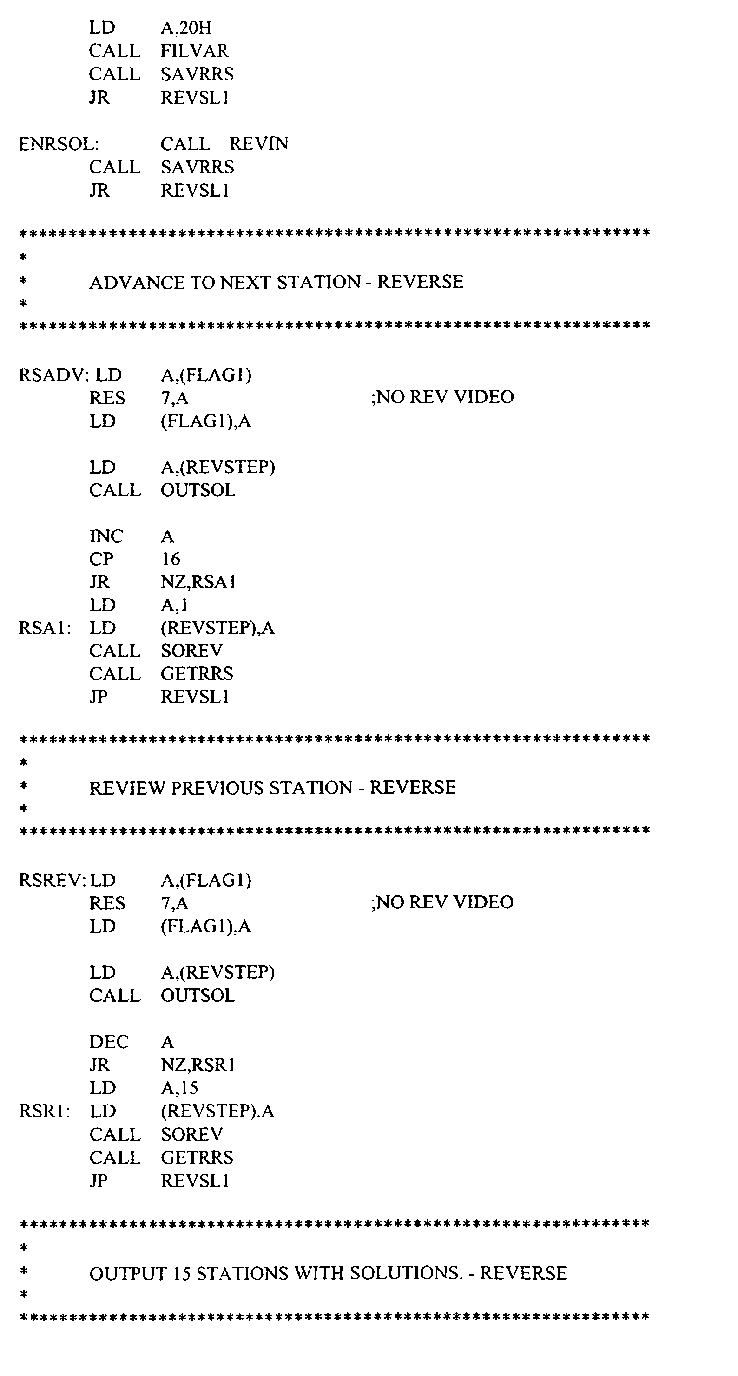

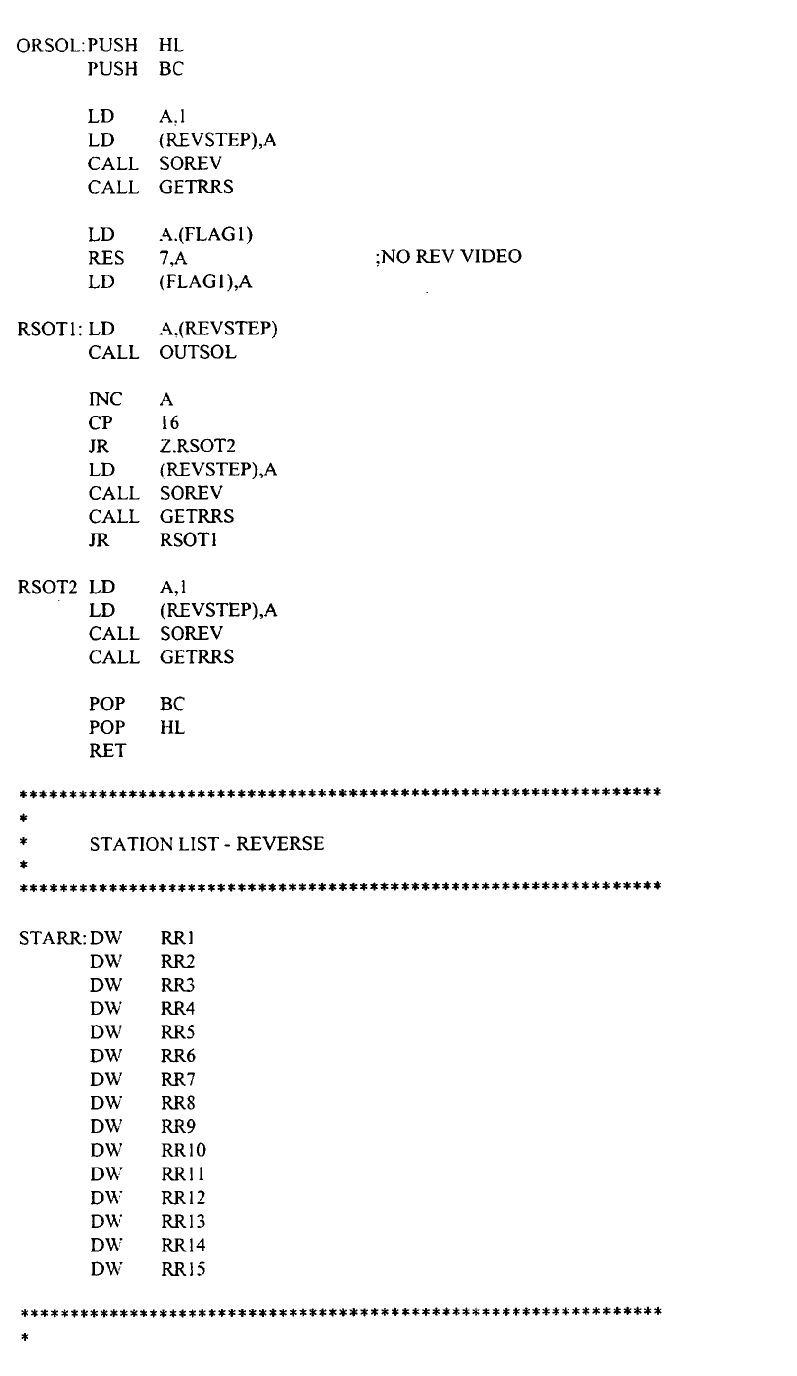

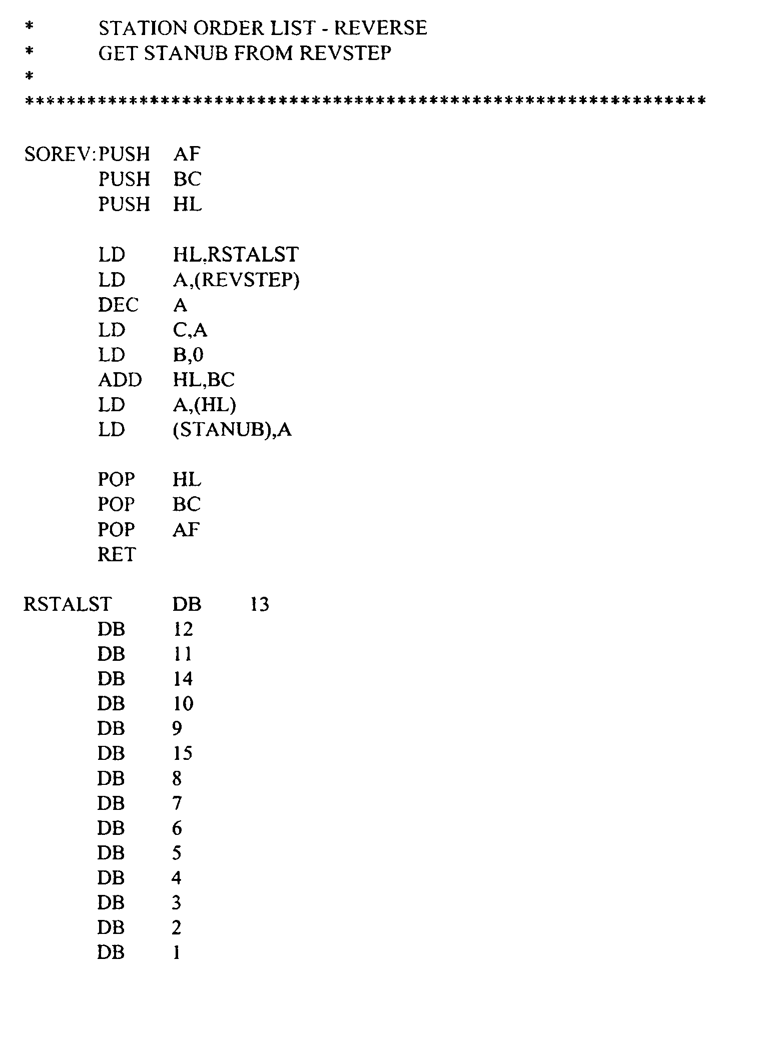

## Claims

1. Method for automatically reprocessing a specimen using a specimen reprocessing machine having processor (54) for controlling the exposure of the specimen to a clearing agent, a dehydrating agent and an aqueous fluid, the method comprising the steps of
providing the specimen which is infiltrated with an infiltrating medium;
indicating to the specimen reprocessing machine that the specimen is to be reprocessed;
exposing the specimen to a clearing agent via the processor (54) to remove the infiltrating medium from the specimen; thereafter
exposing the specimen to a dehydrating agent via the processor (54) to remove the clearing agent; and thereafter
exposing the specimen to an aqueous fluid via the processor (54) to remove the dehydrating agent from the specimen; wherein
the processor (54) further controls the exposure of the specimen to an infiltrating medium and further comprising the steps of
exposing the specimen to a dehydrating agent via the processor (54) after exposing the specimen to an aqueous fluid;
exposing the specimen to a clearing agent to remove the dehydrating agent; and
exposing the specimen to an infiltrating medium to replace the clearing agent.

2. The method of claim 1 wherein the clearing agent is xylene.

3. The method of one of claims 1 or 2 wherein the dehydrating agent is alcohol.

4. The method of one of claims 1 to 3 wherein the aqueous fluid is formalin.

5. The method of claim 1, the method being further for reprocessing a specimen which is infiltrated with an infiltrating medium using a specimen reprocessing system having a processing chamber (16), wherein the method comprises the further steps of:
subjecting the specimen to at least one exposure to a clearant;
subjecting the tissue sample to at least one exposure to a purge dehydrant after the exposure to the clearant, the purge dehydrant being contaminated with clearant and being used to clean the processing chamber (16) of the clearant;
subjecting the specimen to at least one exposure to a dehydrant after the exposure to the purge dehydrant; and
subjecting the specimen to an aqueous fluid.

6. The method of claim 5 further comprising the steps of:
subjecting the specimen to at least one exposure to paraffin; and thereafter
subjecting the specimen to at least one exposure to a purge clearant after the exposure to the bath of paraffin, the purge clearant being contaminated with clearant and being used to clean the processing chamber (16) of paraffin.

7. The method of claim 1, the method being further for reprocessing a specimen which is infiltrated with an infiltrating medium using a specimen reprocessing system having a processing chamber (16), wherein the method comprises the further steps of:
inputting a final step in reprocessing the specimen;
subjecting the specimen to at least one exposure to a clearant;
determining whether the step of subjecting the specimen to at least one exposure of clearant is the final step in reprocessing the specimen;
subjecting the specimen to at least one exposure to a dehydrant if the step of subjecting the specimen to at least one exposure of clearant is not the final step in reprocessing the specimen;
determining whether the step of subjecting the specimen to at least one exposure of dehydrant is the final step in reprocessing the specimen; and
subjecting the specimen to an aqueous fluid if the step of subjecting the specimen to at least one exposure of dehydrant is not the final step in reprocessing the specimen.

8. The method of claim 7 further comprising the step of
subjecting the specimen to an infiltrating medium to replace the clearant, after the step of determining whether the step of subjecting the specimen to at least one exposure of clearant is the final step, if the step of subjecting the specimen to at least one exposure of clearant is the final step in reprocessing the specimen.

9. The method of claim 7 further comprising the steps of:
subjecting the specimen to the clearant to remove the dehydrant, after the step of determining whether the step of subjecting the specimen to at least one exposure of dehydrant is the final step, if the step of subjecting the specimen to at least one exposure of dehydrant is the final step in reprocessing the specimen; and
subjecting the specimen to an infiltrating medium to replace the clearant.

10. The method of claim 6 or 7 further comprising the steps of:
subjecting the specimen to the dehydrant after subjecting the specimen to an aqueous fluid;
subjecting the specimen to the clearant to remove the dehydrant; and
subjecting the specimen to an infiltrating medium to replace the clearant.

## Patentansprüche

1. Verfahren zur automatischen Wiederverarbeitung einer Probe unter Verwendung einer Vorrichtung für die Wiederverarbeitung einer Probe, die einen Prozessor (54) zum Kontrollieren der Aussetzung der Probe an ein Klärmittel, ein Dehydrierungsmittel und ein wäßriges Fluid aufweist, wobei das Verfahren die Schritte
des Bereitstellens der Probe, die mit einem infiltrierenden Medium infiltriert ist, des Anzeigens der Vorrichtung für die Wiederverarbeitung einer Probe, das die Probe wiederverarbeitet werden soll,
des Aussetzens der Probe an ein Klärmittel mit Hilfe des Prozessors (54), um das infiltrierende Medium von der Probe zu entfernen, danach
des Aussetzens der Probe an ein Dehydrierungsmittel mit Hilfe des Prozessors (54), um das Klärmittel zu entfernen und danach
des Aussetzens der Probe an ein wäßriges Fluid mit Hilfe des Prozessors (54), um das Dehydrierungsmittel von der Probe zu entfernen, umfaßt, wobei
der Prozessor (54) weiter das Aussetzen der Probe an ein infiltrierendes Medium kontrolliert, und weiter die Schritte des
Aussetzens der Probe an ein Dehydrierungsmittel mit Hilfe des Prozessors (54), nachdem die Probe einem wäßrigen Fluid ausgesetzt wurde,
des Aussetzens der Probe an ein Klärmittel, um das Dehydrierungsmittel zu entfernen, und
des Aussetzens der Probe an ein infiltrierendes Medium, um das Klärmittel zu ersetzen, umfaßt.

2. Verfahren nach Anspruch 1, wobei das Klärmittel Xylol ist.

3. Verfahren nach einem der Ansprüche 1 oder 2, wobei das Dehydrierungsmittel Alkohol ist.

4. Verfahren nach einem der Ansprüche 1 bis 3, wobei das wäßrige Fluid Formalin ist.

5. Verfahren nach Anspruch 1, wobei das Verfahren weiter für die Wiederverarbeitung einer Probe, die mit einem infiltrierendem Medium infiltriert ist, unter Verwendung eines Systems für die Wiederverarbeitung einer Probe, das eine Verarbeitungskammer (16) aufweist, geeignet ist, wobei das Verfahren weiter die Schritte umfaßt:
Unterwerfen der Probe mindestens einer Aussetzung an ein Klärmittel,
Unterwerfen der Gewebeprobe mindestens einer Aussetzung an ein Spüldehydrierungsmittel nach der Aussetzung an das Klärmittel, wobei das Spüldehydrierungsmittel mit Klärmittel verunreinigt ist und verwendet wird, um die Verarbeitungskammer (16) von dem Klärmittel zu reinigen,
Unterwerfen der Probe mindestens einer Aussetzung an ein Dehydrierungsmittel nach der Aussetzung an das Spüldehydrierungsmittel und
Unterwerfen der Probe einem wäßrigen Fluid.

6. Verfahren nach Anspruch 5, weiter umfassend die Schritte:
Unterwerfen der Probe mindestens einer Aussetzung an Paraffin, und danach
Unterwerfen der Probe mindestens einer Aussetzung an ein Spülklärmittel nach der Aussetzung an das Paraffinbad, wobei das Spülklärmittel mit Klärmittel verunreinigt ist und verwendet wird, um die Verarbeitungskammer (16) von Paraffin zu reinigen.

7. Verfahren nach Anspruch 1, wobei das Verfahren weiter für das Wiederverarbeiten einer Probe, die mit einem infiltrierenden Medium infiltriert ist, unter Verwendung eines Systems für die Wiederverarbeiten einer Probe, das eine Verarbeitungskammer (16) aufweist, geeignet ist, wobei das Verfahren weiter die Schritte umfaßt:
Eingeben eines letzten Schrittes im Wiederverarbeiten der Probe,
Unterwerfen der Probe mindestens einer Aussetzung an ein Klärmittel,
Bestimmen, ob der Schritt des Unterwerfens der Probe mindestens einer Aussetzung an ein Klärmittel der letzte Schritt in der Wiederverarbeitung der Probe ist,
Unterwerfen der Probe mindestens einer Aussetzung an ein Dehydrierungsmittel, wenn der Schritt des Unterwerfens der Probe mindestens einer Aussetzung an ein Klärmittel nicht der letzte Schritt in der Wiederverarbeitung der Probe ist,
Bestimmen ob der Schritt des Unterwerfens der Probe mindestens einer Aussetzung an ein Dehydrierungsmittel der letzte Schritt in der Wiederverarbeitung der Probe ist, und
Unterwerfen der Probe einem wäßrigen Fluid, wenn der Schritt des Unterwerfens der Probe mindestens einer Aussetzung an ein Dehydrierungsmittel nicht der letzte Schritt in der Wiederverarbeitung der Probe ist.

8. Verfahren nach Anspruch 7, weiter umfassend den Schritt
des Unterwerfens der Probe einem infiltrierenden Medium, um das Klärmittel zu ersetzen, nach dem Schritt des Bestimmens ob der Schritt des Unterwerfens der Probe mindestens einer Aussetzung an ein Klärmittel der letzte Schritt ist, wenn der Schritt des Unterwerfens der Probe mindestens einer Aussetzung an ein Klärmittel der letzte Schritt in der Wiederverarbeitung der Probe ist.

9. Verfahren nach Anspruch 7, weiter umfassend den Schritt:
Unterwerfen der Probe einem Klärmittel, um das Dehydrierungsmittel zu entfernen, nach dem Schritt des Bestimmens, ob der Schritt des Unterwerfens der Probe mindestens einer Aussetzung an ein Dehydrierungsmittel der letzte Schritt ist, wenn der Schritt des Unterwerfens der Probe mindestens einer Aussetzung an ein Dehydrierungsmittel der letzte Schritt in der Wiederverarbeitung der Probe ist, und
Unterwerfen der Probe einem infiltrierenden Medium, um das Klärmittel zu ersetzen.

10. Verfahren nach Anspruch 6 oder 7, weiter umfassend die Schritte:
Unterwerfen der Probe einem Dehydrierungsmittel, nach dem Unterwerfen der Probe einem wäßrigen Fluid,
Unterwerfen der Probe einem Klärmittel, um das Dehydrierungsmittel zu entfernen und
Unterwerfen der Probe einem infiltrierenden Medium, um das Klärmittel zu ersetzen.

## Revendications

1. Procédé de retraitement automatique d'un échantillon utilisant une machine de retraitement d'échantillons comprenant un processeur (54) destiné à contrôler l'exposition de l'échantillon à un agent clarifiant, un agent déshydratant et un fluide aqueux, le procédé comprenant les étapes consistant à :
apporter l'échantillon qui est infiltré par un milieu infiltrant ;
indiquer à la machine de retraitement d'échantillons que l'échantillon doit être retraité ;
exposer l'échantillon à un agent clarifiant par l'intermédiaire du processeur (54) pour retirer le milieu infiltrant de l'échantillon ; suite à cela
exposer l'échantillon à un agent déshydratant par l'intermédiaire du processeur (54) pour retirer l'agent clarifiant ; et, suite à cela
exposer l'échantillon à un fluide aqueux par l'intermédiaire du processeur (54) pour retirer l'agent déshydratant de l'échantillon ; dans lequel
le processeur (54) contrôle en outre l'exposition de l'échantillon à un milieu infiltrant, et comprenant en outre les étapes consistant à
exposer l'échantillon à un agent déshydratant par l'intermédiaire du processeur (54) après l'exposition de l'échantillon à un fluide aqueux ;
exposer l'échantillon à un agent clarifiant pour retirer l'agent déshydratant ; et
exposer l'échantillon à un milieu infiltrant pour remplacer l'agent clarifiant.

2. Procédé selon la revendication 1, dans lequel l'agent clarifiant est du xylène.

3. Procédé selon l'une des revendications 1 ou 2, dans lequel l'agent déshydratant est de l'alcool.

4. Procédé selon l'une des revendications 1 à 3, dans lequel le fluide aqueux est du formaldéhyde.

5. Procédé selon la revendication 1, le procédé étant en outre conçu pour retraiter un échantillon qui est infiltré par un milieu infiltrant en utilisant un système de retraitement d'échantillons comprenant une chambre de traitement (16), dans lequel le procédé comprend les étapes supplémentaires consistant à :
soumettre l'échantillon à au moins une exposition à un clarifiant ;
soumettre l'échantillon de tissu à au moins une exposition à un déshydratant de purge suite à l'exposition au clarifiant, le déshydratant de purge étant contaminé par du clarifiant et étant utilisé pour nettoyer la chambre de traitement (16) du clarifiant ;
soumettre l'échantillon à au moins une exposition à un déshydratant suite à l'exposition au déshydratant de purge ; et
soumettre l'échantillon à un fluide aqueux.

6. Procédé selon la revendication 5, comprenant en outre les étapes consistant à :
soumettre l'échantillon à au moins une exposition à de la paraffine ; et, suite à cela,
soumettre l'échantillon à au moins une exposition à un clarifiant de purge après l'exposition au bain de paraffine, le clarifiant de purge étant contaminé par du clarifiant et étant utilisé pour nettoyer la chambre de traitement (16) de la paraffine.

7. Procédé selon la revendication 1, le procédé étant en outre conçu pour retraiter un échantillon qui est infiltré par un milieu infiltrant en utilisant un système de retraitement d'échantillon comprenant une chambre de traitement (16), dans lequel le procédé comprend les étapes supplémentaires consistant à :
initier une étape finale de retraitement de l'échantillon ;
soumettre l'échantillon à au moins une exposition à un clarifiant ;
déterminer si l'étape consistant à soumettre l'échantillon à au moins une exposition à du clarifiant est l'étape finale de retraitement de l'échantillon ;
soumettre l'échantillon à au moins une exposition à un déshydratant si l'étape consistant à soumettre l'échantillon à au moins une exposition à du clarifiant n'est pas l'étape finale de retraitement de l'échantillon ;
déterminer si l'étape consistant à soumettre l'échantillon à au moins une exposition à du déshydratant est l'étape finale de retraitement de l'échantillon ; et
soumettre l'échantillon à un fluide aqueux si l'étape consistant à soumettre l'échantillon à au moins une exposition à du déshydratant n'est pas l'étape finale de retraitement.

8. Procédé selon la revendication 7, comprenant en outre l'étape consistant à
soumettre l'échantillon à un milieu infiltrant pour remplacer le clarifiant suite à l'étape consistant à déterminer si l'étape consistant à soumettre l'échantillon à au moins une exposition à du clarifiant est l'étape finale, si l'étape consistant à soumettre l'échantillon à au moins une exposition à du clarifiant est l'étape finale de retraitement de l'échantillon.

9. Procédé selon la revendication 7, comprenant en outre les étapes consistant à :
soumettre l'échantillon au clarifiant pour retirer le déshydratant, après l'étape consistant à déterminer si l'étape consistant à soumettre l'échantillon à au moins une exposition à du déshydratant est l'étape finale, si l'étape consistant à soumettre l'échantillon à au moins une exposition à du déshydratant est l'étape finale de retraitement de l'échantillon ; et
soumettre l'échantillon à un milieu infiltrant pour remplacer le clarifiant.

10. Procédé selon la revendication 6 ou 7, comprenant en outre les étapes consistant à :
soumettre l'échantillon au déshydratant après avoir soumis l'échantillon à un fluide aqueux ;
soumettre l'échantillon au clarifiant pour retirer le déshydratant ; et
soumettre l'échantillon à un milieu infiltrant pour remplacer le clarifiant.
